# EUROPÄISCHE PATENTSCHRIFT

(11) **EP 3 473 821 B1**
(45) Veröffentlichungstag und Bekanntmachung des Hinweises auf die Patenterteilung: **08.07.2020**
(21) Anmeldenummer: 18191402.9
(22) Anmeldetag: 29.08.2018
(51) Int. Cl.: F01K 7/38, F01K 9/00, F01K 11/02, F01K 17/02, F01K 7/16, F01K 13/02

(54) **KRAFT-WÄRME-KOPPLUNGSANLAGE UND VERFAHREN ZUR REGELUNG EINER KRAFT-WÄRME-KOPPLUNGSANLAGE**
COMBINED HEAT AND POWER PLANT AND METHOD FOR CONTROLLING A COMBINED HEAT AND POWER PLANT
INSTALLATION DE PRODUCTION COMBINÉE DE CHALEUR ET D'ÉLECTRICITÉ ET PROCÉDÉ DE RÉGULATION D'UNE INSTALLATION DE PRODUCTION COMBINÉE DE CHALEUR ET D'ÉLECTRICITÉ

(30) Priorität: 04.10.2017 DE 102017122995
(43) Veröffentlichungstag der Anmeldung: 24.04.2019
(73) Patentinhaber: Thiessen, Peter, 33758 Schloß Holte - Stukenbrock (DE); Henrichs, Thomas, 33788 Schloß Holte-Stukenbrock (DE); Hachmann, Thomas, 59939 Olsberg (DE); Schulte, Franz-Josef, 59939 Olsberg (DE)
(72) Erfinder: Thiessen, Peter, 33758 Schloß Holte - Stukenbrock (DE); Henrichs, Thomas, 33788 Schloß Holte-Stukenbrock (DE); Hachmann, Thomas, 59939 Olsberg (DE); Schulte, Franz-Josef, 59939 Olsberg (DE)
(74) Vertreter: Habermann Intellectual Property Partnerschaft von Patentanwälten mbB

(56) Entgegenhaltungen:
- EP-A1- 2 728 132
- EP-A2- 0 099 501
- DE-A1-102012 203 567
- US-A- 3 596 888
- US-A- 3 660 980
- US-A- 4 425 762
- US-A1- 2012 133 063

## Beschreibung

Die Erfindung betrifft eine wärmegeführte und stromorientierte Kraft-Wärme-Kopplungsanlage zur energetischen, insbesondere elektrischen und thermischen Versorgung von beweglichen und stationären Objekten.

Um den wachsenden Herausforderungen zur umweltfreundlichen Bereitstellung von thermischer und elektrischer Energie zum Beheizen von Gebäuden und zur Versorgung von Gebäuden mit Strom zu entsprechen, hat sich als ein sinnvoller Ansatz erwiesen, Kraft-Wärme-Kopplungsanlagen (KWK) in Form von so genannten Blockheizkraftwerken zu betreiben. Derartige Blockheizkraftwerke werden nach der von ihnen zu Verfügung gestellten elektrischen Leistung klassifiziert, wobei Anlagen unter 50 kW elektrischer Leistung als Mini-KWK, Anlagen unter 10 kW elektrischer Leistung als Mikro-KWK und Anlagen unter 3,0 kW elektrischer Leistung als Nano-KWK bezeichnet werden. Blockheizkraftwerke weisen stets zumindest einen Antrieb sowie einen elektrischen Generator auf. Als Antrieb können unter anderem Kolbenhubmotoren, Stirlingmotoren, Dampfmotoren oder Ähnliches verwendet werden.

Allen bekannten Antrieben für Nano-Blockheizkraftwerke ist gemein, dass sie aufwendig konstruiert sind und eine hohe Zahl an Einzelteilen aufweisen, wodurch hohe Herstellungs-und Wartungskosten verursacht werden. Zudem sind die Blockheizkraftwerke aus diesen Gründen auch vergleichsweise störanfällig. Insbesondere hubkolbenbasierte Antriebe, wie beispielsweise Verbrennungsmotoren, benötigen zumindest eine Kraftübersetzung über Kurbel und Pleuel um eine Antriebsleistung direkt oder indirekt auf eine Generatorwelle übertragen zu können. Darüber hinaus benötigen insbesondere Verbrennungsmotoren ein Getriebe, um ein bauartbedingt niedriges Anfahrdrehmoment zu kompensieren. Die Lebensdauer soll ca. 80.000 Betriebsstunden betragen. Übliche Motoren haben nur eine Lebensdauer von 5.000 bis max. 20.000 Betriebsstunden.

Auch Dampfmaschinen üblicher Bauart sind als Kolbenmotor ausgeführt und setzten den Einsatz einer Kraftübersetzung über Kurbel und Pleuel auf eine Antriebswelle sowie direkt oder indirekt auf die Generatorwelle voraus. Es sind auch Ausführungsformen von Dampfmaschinen mit Getrieben bekannt. Die Schmierung der Lager der bekannten Dampfmaschinen ist besonders aufwendig, da bei den notwendigerweise auftretenden hohen Temperaturen von bis zu 500°C und den erforderlichen hohen Standzeiten von in der Regel über 60.000 bis 80.000 Betriebsstunden, die Schmierung nur mittels spezieller Hochtemperaturschmierstoffe erfolgen kann, die regelmäßig ersetzt werden müssen.

Um derartige Anlagen im privaten Bereich betreiben zu können, ist eine nach Möglichkeit vollständige Trennung des Dampfes, beziehungsweise des Kondensats von einem verwendeten Schmiermittel erforderlich. Dies ist bei den bekannten dampfkraftbasierten Anlagen bei Dauerbetrieb nicht vollständig zu erreichen. Die bekannten Maschinen können zudem nicht oder nur in kleinem Bereich, in der abgegebenen elektrischen und thermischen Leistung variiert werden.

Eine Sonderform der Dampfmaschine stellt die Freikolbenmaschine dar, bei der ein Kolben dampfbetrieben zwischen einem ersten und einem zweiten Totpunkt hin und her schwingt. Bei einer Verwendung in einem Blockheizkraftwerk kann der Kolben der Freikolbenmaschine direkt mit einem Lineargenerator gekoppelt werden. Diese auch Linator genannten Maschinen zeichnen sich insbesondere dadurch aus, dass die abgegebene elektrische Leistung einfach und in einem relativ weiten Bereich variiert werden kann; allerdings sind Linatoren komplex aufgebaut und wartungsintensiv.

Eine weitere Ausführungsform dampfbetriebener Arbeitsmaschinen sind Dampfturbinen. Dampfturbinen weisen eine geringere Komplexität auf, als beispielsweise Hubkolbendampfmaschinen oder Freikolbenmaschinen und sind daher grundsätzlich weniger störanfällig und wartungsintensiv als diese. Aufgrund technischer Einschränkungen und wirtschaftlicher Erwägungen kommen Dampfturbinen bei Blockheizkraftwerken derzeit lediglich bei Anlagen mit einer elektrischen Leistung von über 30 kW zum Einsatz. Bei kleineren thermischen und elektrischen Leistungen, beispielsweise für Wohngebäude, werden Dampfturbinen bisher aus technischen und wirtschaftlichen Gründen nicht eingesetzt. Aus US2596888 ist eine Kraftwerksanlage umfassend einen Dampfturbosatz nach dem Stand der Technik bekannt.

Als Aufgabe der vorliegenden Erfindung wird es angesehen, eine wärmegeführte Kraft-Wärme-Kopplungsanlage zur Verfügung zu stellen, die zumindest einen überwiegenden Teil der Wärmeversorgung sowie mittels einer Dampfturbine die zumindest teilweise elektrische Versorgung eines Gebäudes bereitstellt.

Diese Aufgabe wird erfindungsgemäß dadurch gelöst, dass die Kraft-Wärme-Kopplungsanlage einen Dampfturbosatz, einen Dampferzeuger zum Verdampfen eines Arbeitsmediums, einen Kondensator zum Kondensieren des Arbeitsmediums, eine Speisepumpe, eine Primärpumpe sowie einen Nutzwärmeübertrager aufweist, wobei der Dampfturbosatz eine Dampfturbine sowie einen mit der Dampfturbine in Wirkverbindung stehenden Generator aufweist, wobei der Dampferzeuger mittels des Brennstoffs befeuerbar ist, wobei der Dampfturbosatz innerhalb eines Kondensatorgehäuses des Kondensators angeordnet ist, wobei der Dampferzeuger mittels einer ersten Dampfleitung mit einem Einlass der Dampfturbine verbunden ist, sodass das verdampfte Arbeitsmedium von dem Dampferzeuger durch den Einlass in die Dampfturbine einleitbar ist, wobei die Dampfturbine mittels des verdampften Arbeitsmediums antreibbar ist, wobei die Dampfturbine einen Auslass aufweist, der zu einem von dem Kondensatorgehäuse umschlossenen Kondensationsraum des Kondensators hin offen ist, sodass das Arbeitsmedium nach dem Antreiben der Dampfturbine aus der Dampfturbine austreten und unmittelbar in den Kondensationsraum eintreten kann, wobei der Kondensationsraum mit zumindest einem Kondensationswärmeübertrager thermisch gekoppelt ist, wobei das Arbeitsmedium mittels des Kondensationswärmeübertragers kondensiert wird, wobei der Kondensator ein Reservoir aufweist, in dem sich das kondensierte Arbeitsmedium sammelt, wobei das Reservoir über eine erste Fluidleitung mit der Primärpumpe verbunden ist, wobei die Primärpumpe über eine zweite Fluidleitung mit dem Nutzwärmeübertrager verbunden ist, wobei mittels des Nutzwärmeübertragers Wärme von dem Arbeitsmedium auf ein in einem Sekundärkreislauf zirkulierendes Heizmedium übertragbar ist und wobei der Nutzwärmeübertrager über eine dritte Fluidleitung mit dem Kondensator verbunden ist, sodass das Arbeitsmedium zumindest teilweise in einem aus Kondensator, erster Fluidleitung, Primärpumpe, zweiter Fluidleitung, Nutzwärmeübertrager und dritter Fluidleitung gebildeten Primärkreislauf zirkulieren kann, wobei eine der Fluidleitungen einen Saugabzweig für die Speisepumpe aufweist, wobei der Saugabzweig mittels einer vierten Fluidleitung mit einem Sauganschluss der Speisepumpe verbunden ist, wobei die Speisepumpe einen Druckanschluss aufweist, wobei der Druckanschluss über eine fünfte Fluidleitung mit dem Dampferzeuger verbunden ist, sodass mittels der Speisepumpe das Arbeitsmedium zumindest teilweise aus dem Primärkreislauf in den Dampferzeuger gepumpt werden kann und wobei das Arbeitsmedium zumindest teilweise in einem aus Kondensator, erster Fluidleitung, Primärpumpe, zweiter Fluidleitung, Saugabzweig, vierter Fluidleitung, Speisepumpe, fünfter Fluidleitung, Dampferzeuger und erster Dampfleitung gebildetem Arbeitskreislauf zirkulieren kann. Durch eine derartige Ausgestaltung der erfindungsgemäßen Kraft-Wärme-Kopplungsanlage wird erreicht, dass der gesamte Strom, der durch die Anlage produziert wird, innerhalb des durch die Kraft-Wärme-Kopplungsanlage versorgten Objekts verbraucht werden kann. Es ist vorteilhafter Weise vorgesehen, dass eine elektrische Ausgangsleistung des Dampfturbosatzes moduliert werden kann, um sie entsprechend eines Bedarfs zu verändern. Das verdampfte Arbeitsmedium wird im Folgenden auch als Dampf bezeichnet.

Die in dem Dampfturbosatz verwendete Dampfturbine kann sowohl eine radial, als auch eine axial durchströmte Dampfturbine sein. Dem Fachmann sind eine Vielzahl an Ausführungsformen von Dampfturbinen bekannt, beispielsweise die Bauformen nach Rateau, Zoelly, Parsons oder Ähnliche, wobei alle diese Bauformen geeignet sind in der erfindungsgemäßen Kraft-Wärme-Kopplungsanlage verwendet zu werden. Es ist auch möglich, dass die Dampfturbine als eine mehrstufige Dampfturbine ausgestaltet sein kann.

Aufgrund seiner gut beherrschten chemischen und physikalischen Eigenschaften ist als bevorzugtes Arbeitsmedium zum Antrieb der Dampfturbine Wasser vorgesehen. Darüber hinaus sind dem Fachmann weitere Stoffe und Stoffgemische bekannt, die geeignet sind als Arbeitsmedium zum Antrieb einer Dampfturbine zu dienen, beispielsweise Halogenkohlenwasserstoffe.

Um einen möglichst wirtschaftlichen Betrieb der erfindungsgemäßen Kraft-Wärme-Kopplungsanlage zu erreichen, ist es vorgesehen, dass der Brennstoff zum Befeuern des Dampferzeugers bevorzugt ein Brenngas, beispielsweise Erdgas, Flüssiggas, Stadtgas, synthetisches Gas oder Ähnliches ist. Es ist auch möglich und erfindungsgemäß vorgesehen, dass der Dampferzeuger mittels eines festen Brennstoffs, beispielsweise Holzpellets, Kohle oder Ähnlichem, oder eines flüssigen Brennstoffs, beispielsweise Heizöl, Petroleum oder Ähnlichem befeuerbar sein kann.

Um ein Zirkulieren des Arbeitsmediums zu ermöglichen wird vorteilhafterweise eine Speisepumpe eingesetzt. Um das Energiegefälle zu vergrößern ist erfindungsgemäß vorteilhafterweise ein Kondensator vorgesehen. Es ist möglich und erfindungsgemäß vorgesehen, dass der Kondensator vorteilhafterweise zumindest einen Gegenstromwärmeübertrager, einen Gleichstromwärmeübertrager, Heatpipes oder vergleichbare Wärmeübertrager aufweisen kann. Des Weiteren ist es möglich und erfindungsgemäß vorgesehen, dass der Kondensator eine Kombination aus verschiedenen Wärmeübertragern aufweisen kann.

Um eine Zirkulation des Arbeitsmediums in dem Arbeitskreislauf und dem Primärkreislauf zu erzwingen, weist die Kraft-Wärme-Kopplungsanlage zumindest eine Speisepumpe und eine Primärpumpe auf. Es ist vorgesehen, dass die Pumpen als Zahnradpumpen ausgestaltet sind. Es ist auch möglich und erfindungsgemäß vorgesehen, Membranpumpen, Kreiskolbenpumpen, Kolbenpumpen, Impellerpumpen oder Ähnliche als Speise- und/ oder Primärpumpen in der erfindungsgemäßen Kraft-Wärme-Kopplungsanlage zu verwenden. Es ist auch vorgesehen, dass die Primärpumpe so angeordnet ist, dass sie einen geodätischen Staudruck des Arbeitsmediums aus dem Kondensator als Vorlauf nutzen kann.

Damit die durch die Kraft-Wärme-Kopplungsanlage bereitgestellte thermische Leistung genutzt werden kann, beispielsweise zum Beheizen eines Wohnhauses, ist es vorgesehen, dass die erfindungsgemäße Kraft-Wärme-Kopplungsanlage zumindest einen Nutzwärmeübertrager aufweist. Um eine möglichst kompakte Bauform zu ermöglichen ist es vorgesehen, dass der Nutzwärmeübertrager als ein Plattenwärmeübertrager ausgestaltet ist. Es ist jedoch auch möglich und erfindungsgemäß vorgesehen, einen Spiralwärmeübertrager, einen Rohrbündelwärmeübertrager oder einen Mantelrohrwärmeübertrager als Nutzwärmeübertrager in der erfindungsgemäßen Kraft-Wärme-Kopplungsanlage zu verwenden.

Um einen Einfluss von Umweltfaktoren auf den Dampfturbosatz möglichst gering zu halten, ist dieser erfindungsgemäß innerhalb des Kondensatorgehäuses angeordnet. Hierdurch entfällt die Notwendigkeit einer Abdichtung zwischen der Dampfturbine und dem Generator. Aufgrund des erfindungsgemäß verringerten Drucks des Arbeitsmediums innerhalb des Kondensatorgehäuses sind die Ventilationsverluste aller rotierenden Teile verringert. Eine derartige Anordnung des Dampfturbosatzes verringert auch einen korrosiven Einfluss von Luftsauerstoff auf den Dampfturbosatz.

Eine vorteilhafte Umsetzung des Erfindungsgedankens sieht vor, dass der Dampfturbosatz eine maximale elektrische Leistung von höchstens 3000 Watt, bevorzugt von höchstens 2000 Watt und besonders bevorzugt von höchstens 1000 Watt aufweist. Durch eine derartige Ausgestaltung der erfindungsgemäßen Kraft-Wärme-Kopplungsanlage wird erreicht, dass die bereitgestellte elektrische und thermische Leistung einem Bedarf eines durch die Kraft-Wärme-Kopplungsanlage versorgten Gebäudes entspricht.

Um die durch die erfindungsgemäße Kraft-Wärme-Kopplungsanlage bereitgestellte elektrische Leistung an Bedarfsschwankungen anpassen zu können ist es vorteilhafterweise vorgesehen, dass die elektrische Leistung des Dampfturbosatzes in einem Bereich von 0 bis 3000 Watt, bevorzugt von 0 bis 2000 Watt und besonders bevorzugt von 0 bis 1000 Watt einstellbar ist.

Eine vorteilhafte Umsetzung des Erfindungsgedankens sieht vor, dass der Dampfturbosatz eine einzelne Antriebswelle aufweist, wobei die Dampfturbine und der Generator mittels der Antriebswelle unmittelbar mechanisch miteinander gekoppelt sind. Durch eine derartige Ausgestaltung des Dampfturbosatzes kann auf ein Getriebe zwischen der Dampfturbine und dem Generator verzichtet werden, wodurch der Aufbau der erfindungsgemäßen Kraft-Wärme-Kopplungsanlage vereinfacht wird. Es ist vorgesehen, dass die Antriebswelle beispielsweise mittels einer Nut- und Federverbindung, mittels einer Schraubverbindung, mittels Aufschrumpfen, mittels Verschweißen oder Ähnlichem an der Dampfturbine und/ oder dem Generator festgelegt sein kann.

Eine vorteilhafte Ausgestaltung der Erfindung ist dadurch gekennzeichnet, dass auf der Antriebswelle sowohl eine Beschaufelung der Dampfturbine, als auch ein Rotor des Generators angeordnet sind. Es ist möglich und vorgesehen, dass die Beschaufelung der Dampfturbine beispielsweise auf einem separaten Turbinenrad angeordnet sein kann, wobei das Turbinenrad auf die Antriebswelle aufgeschrumpft oder mittels einer Presspassung an der Antriebswelle festgelegt sein kann. Es ist ebenfalls möglich, dass die Beschaufelung mittels eines urformenden Fertigungsverfahrens, beispielsweise mittels Gießens, Lasersinterns oder einem ähnlichen Verfahren an die Antriebswelle angeformt sein kann. Darüber hinaus können Turbinenschaufeln einer Beschaufelung der Dampfturbine mittels eines Fügeverfahrens, beispielsweise mittels Reibschweißen, Autogenschweißen oder einem ähnlichen Verfahren, an der Antriebswelle festgelegt sein. Es ist erfindungsgemäß vorgesehen, dass der Rotor des Generators beispielsweise auf die Antriebswelle aufgeschrumpft, aufgepresst, aufgeschraubt oder Ähnliches sein kann.

Eine vorteilhafte Ausgestaltung der Erfindung sieht vor, dass der Dampfturbosatz Lagerelemente zur Lagerung rotierender Bauteile aufweist, wobei die Lagerelemente zumindest teilweise als hydrodynamische Lager ausgebildet sind. Hydrodynamische Lager zeichnen sich dadurch aus, dass zwischen einem in Rotation befindlichen rotierenden Bauteil des Dampfturbosatzes und dem hydrodynamischen Lager ein Fluidfilm ausgebildet ist, sodass zwischen den rotierenden Bauteilen und den Lagerelementen bei einem Betrieb des Dampfturbosatzes kein direkter Kontakt besteht und so ein Verschleiß der Lagerelemente, sowie der rotierenden Bauteile im Bereich der Lagerung verringert ist. Es ist vorteilhafterweise auch vorgesehen, dass der Fluidfilm durch das Arbeitsmedium gebildet sein kann. Darüber hinaus ist es auch vorgesehen, dass die Antriebs- und/ oder Generatorwelle vor einem Anlaufen der Turbine mittels eines hydrostatischen Drucks des Arbeitsmedium angehoben und damit entlastet werden kann. Um den Schmierstrom durch die Lager zu begrenzen ist es darüber hinaus auch möglich und erfindungsgemäß vorgesehen, dass stromaufwärts der als hydrodynamische Lager ausgebildeten Lagerelemente ein Druckminderer angeordnet ist.

Eine vorteilhafte Umsetzung des Erfindungsgedankens sieht vor, dass der Dampfturbosatz Lagerelemente zur Lagerung rotierender Bauteile aufweist, wobei die Lagerelemente zumindest teilweise als Gleitlager ausgebildet sind, wobei die Gleitlager mittels des Arbeitsmediums schmierbar sind. Eine derartige Ausgestaltung der erfindungsgemäßen Kraft-Wärme-Kopplungsanlage ermöglicht eine besonders effiziente Schmierung der Lagerelemente, wobei gleichzeitig eine Kontamination des Arbeitsmediums mit einem ansonsten erforderlichen Schmiermittel verhindert ist.

Eine vorteilhafte Ausgestaltung der Erfindung sieht vor, dass die dritte Fluidleitung einen Schmierabzweig aufweist, wobei der Schmierabzweig mittels einer sechsten Fluidleitung mit einem Pumpeneingang einer Schmierpumpe verbunden ist, wobei die Schmierpumpe einen Pumpenausgang aufweist, der über eine siebte Fluidleitung mit zumindest einer Schmierzuleitung zumindest eines Lagerelements verbunden ist, wobei das Lagerelement einen Schmierauslass aufweist und wobei durch den Schmierauslass Fluid nach einem Schmieren des Lagerelements direkt oder indirekt in das Reservoir des Kondensators einleitbar ist, sodass das Arbeitsmedium zumindest teilweise in einem durch vierte Fluidleitung, Schmierabzweig, sechsten Fluidleitung, Schmierpumpe, siebte Fluidleitung, Lagerelement und Kondensator gebildeten Schmierkreislauf zirkuliert. Aufgrund der besonderen Auslegung der Lagerelemente ist eine Schmierung der Lagerelemente mittels des Arbeitsmediums ermöglicht. Um durch eine Verwendung des Arbeitsmedium als Schmiermittel eine Beeinflussung des Primär- und/ oder Arbeitskreislaufs möglichst gering zu halten, ist es vorteilhafterweise vorgesehen, dass die Kraft-Wärme-Kopplungsanlage einen separaten Schmierkreislauf mit einer separaten Schmierpumpe aufweist. Um etwaige Verunreinigungen, beispielsweise Metall- oder Kunststoffspäne, an einem Eintritt in die Lagerelemente zu hindern und um diese aus dem Arbeitsmedium herausfiltern zu können, ist es vorteilhafterweise vorgesehen, dass zwischen der Schmiermittelpumpe und den Lagerelementen ein Schmiermittelfilter angeordnet ist, den das Schmiermittel durchströmen muss, bevor es in die Lagerelemente eingeleitet wird. Vorteilhaft ist außerdem vorgesehen, dass das Schmiermittel gleichzeitig zur Kühlung des Elektrogenerators verwendet wird.

Eine vorteilhafte Umsetzung des Erfindungsgedankens sieht vor, dass in dem Schmierkreislauf ein Hydrospeicher angeordnet ist, wobei der Hydrospeicher mittels der Schmierpumpe mit dem Arbeitsmedium befüllbar ist, wobei mittels des Arbeitsmediums aus dem Hydrospeicher Lagerelemente des Dampfturbosatzes bei einem Ausfall der Schmierpumpe bis zu einem Stillstand des Dampfturbosatzes schmierbar sind. Um im Falle eines Ausfalls einzelner Komponenten, insbesondere der Schmierpumpe, einen sicheren Notlauf bis zum Stillstand des Dampfturbosatzes zu ermöglichen, ist es vorteilhafterweise vorgesehen, dass zwischen der Schmierpumpe und den Lagerelementen ein Hydrospeicher angeordnet ist. Es ist erfindungsgemäß vorgesehen, dass der Hydrospeicher bei Ausfall der Schmierpumpe einen Schmierdruck bis zum Stillstand des Dampfturbosatzes aufrechterhalten kann. Um den Hydrospeicher mit Druck zu beaufschlagen ist vorteilhafterweise vorgesehen, dass der Hydrospeicher dauerhaft mit einem Förderdruck durch die Schmiermittelpumpe beaufschlagt wird, oder dass der Druck durch einen in einem Notfall auslösbaren Gasdruckspeicher oder ähnliche Maßnahmen bereitgestellt wird.

Eine vorteilhafte Ausgestaltung der Erfindung sieht vor, dass die siebte Fluidleitung den Saugabzweig zur Speisepumpe aufweist, sodass das Arbeitsmedium zumindest teilweise in einem aus Kondensator, erster Fluidleitung, Primärpumpe, zweiter Fluidleitung, Nutzwärmeübertrager, dritter Fluidleitung, Schmierabzweig, sechster Fluidleitung, Schmierpumpe, siebter Fluidleitung, Saugabzweig, vierter Fluidleitung, Speisepumpe, fünfter Fluidleitung, Dampferzeuger und erster Dampfleitung gebildeten Arbeitskreislauf zirkuliert. Durch eine derartige Ausgestaltung der erfindungsgemäßen Kraft-Wärme-Kopplungsanlage wird erreicht, dass das Arbeitsmedium in dem Arbeitskreislauf sowohl durch die Primärpumpe, als auch durch die Schmiermittelpumpe und die Speisepumpe mit Druck beaufschlagt wird. Darüber hinaus wird so auch erreicht, dass das Arbeitsmedium in dem Arbeitskreislauf eine möglichst geringe Temperatur aufweist, wodurch der Wirkungsgrad der Kraft-Wärme-Kopplungsanlage erhöht ist.

Eine weitere vorteilhafte Ausgestaltung der Erfindung sieht vor, dass die sechste Fluidleitung den Saugabzweig zur Speisepumpe aufweist, sodass das Arbeitsmedium zumindest teilweise in einem aus Kondensator, erster Fluidleitung, Primärpumpe, zweiter Fluidleitung, Nutzwärmeübertrager, dritter Fluidleitung, Schmierabzweig, sechster Fluidleitung, Saugabzweig, vierter Fluidleitung, Speisepumpe, fünfter Fluidleitung, Dampferzeuger und erster Dampfleitung gebildeten Arbeitskreislauf zirkuliert. Hierdurch wird es ermöglicht, dass ein Leitungsquerschnitt der Fluidleitungen des Schmierkreislaufs auf eine Förderung des als Schmiermittel vorgesehenen Arbeitsmediums hin optimiert werden kann.

Eine vorteilhafte Umsetzung des Erfindungsgedankens sieht vor, dass die erste Dampfleitung einen Bypassabzweig aufweist, wobei der Bypassabzweig mittels einer zweiten Dampfleitung mit einem Bypasswärmeübertrager verbunden ist, wobei mittels des Bypasswärmeübertragers Wärme von dem Arbeitsmedium auf das in dem Sekundärkreislauf zirkulierende Heizmedium übertragbar ist, wobei der Bypasswärmeübertrager mittels einer achten Fluidleitung mit dem Kondensator verbunden ist, wobei die achte Fluidleitung ein Bypassventil aufweist, wobei das Arbeitsmedium nur bei geöffnetem Bypassventil in einem zumindest aus Dampferzeuger, erster Dampfleitung, Bypassabzweig, zweiter Dampfleitung, Bypasswärmeübertrager, achter Fluidleitung, Kondensator, erster Fluidleitung, Primärpumpe, Saugabzweig, vierter Fluidleitung, Speisepumpe und fünfter Fluidleitung gebildeten Bypasskreislauf zirkuliert, sodass bei geöffnetem Bypassventil ein Durchströmen der Dampfturbine mit Dampf zumindest verringert ist und so durch den Dampfturbosatz weniger elektrische Leistung bereitgestellt wird. Der Bypasskreislauf ermöglicht eine ununterbrochene Bereitstellung thermischer Energie, auch wenn eine Bereitstellung elektrischer Energie durch den Dampfturbosatz nicht erforderlich ist. Durch den Bypasskreislauf wird es auch ermöglicht, dass überschüssiger Dampfdruck bei einem Anfahren des Dampfturbosatzes abgeleitet werden kann, ohne dass die Dampfturbine beschädigt wird, oder überschüssiger Dampf ungenutzt abgeführt werden muss. Ein konstant hoher Druck im Dampferzeuger bedingt eine hohe Siedetemperatur des Arbeitsmediums, wodurch der Wirkungsgrad der erfindungsgemäßen Kraft-Wärme-Kopplungsanlage erhöht ist. Darüber hinaus ermöglicht der Bypasskreislauf ein kontrolliertes Herunterfahren der Kraft-Wärme-Kopplungsanlage, falls es zu einem Ausfall des Dampfturbosatzes oder der Dampfturbine kommen sollte.

Eine vorteilhafte Ausgestaltung der Erfindung sieht vor, dass der Dampferzeuger einen Brenner zum Verbrennen des Brennstoffs, einen Verdampfer sowie einen Überhitzer aufweist, wobei der Verdampfer mittels einer ersten Verdampferleitung mit einem Fluideinlass des Dampferzeugers verbunden ist, wobei der Überhitzer mittels einer zweiten Verdampferleitung mit einem Dampfauslass des Verdampfers verbunden ist, wobei das Arbeitsmedium durch den Fluideinlass in den Dampferzeuger eintritt und zunächst in dem Verdampfer verdampft wird und wobei das verdampfte Arbeitsmedium in dem Überhitzer über eine Siedetemperatur des Arbeitsmediums hinaus erhitzt wird, sodass mittels des Dampferzeugers das Arbeitsmedium zu einem Heißdampf verdampft werden kann. Heißdampf im Sinne des Erfindungsgedankens meint, dass das vollständig verdampfte Arbeitsmedium über seine Siedetemperatur hinaus erhitzt wird, sodass keine Flüssigkeit mehr im Dampf vorhanden ist. Hierdurch wird erreicht, dass ein Verschleiß der Dampfturbine, insbesondere der Beschaufelung, verringert ist und dass der Wirkungsgrad der erfindungsgemäßen Kraft-Wärme-Kopplungsanlage erhöht ist.

Eine vorteilhafte Umsetzung des Erfindungsgedankens sieht vor, dass der Verdampfer einen Vorverdampfer und einen Hauptverdampfer aufweist, wobei der Vorverdampfer mittels der ersten Verdampferleitung mit dem Fluideinlass des Dampferzeugers verbunden ist, wobei der Hauptverdampfer mittels einer dritten Verdampferleitung mit dem Vorverdampfer verbunden ist, wobei der Hauptverdampfer mittels der zweiten Verdampferleitung mit dem Überhitzer verbunden ist, wobei durch den Brenner im Vorverdampfer eine höhere Wärmestromdichte bereitgestellt wird, als im Hauptverdampfer, sodass das Arbeitsmedium in dem Vorverdampfer zunächst auf seine Siedetemperatur erhitzt und teilweise verdampft wird und wobei das Arbeitsmedium anschließend in dem Hauptverdampfer vollständig verdampft wird. Eine derartige Ausgestaltung des Verdampfers ermöglicht, dass ein optimaler Wärmeeintrag in das Arbeitsmedium erreicht wird.

Eine vorteilhafte Ausgestaltung der Erfindung sieht vor, dass der Dampferzeuger einen Vorwärmer aufweist, wobei der Vorwärmer mittels der ersten Verdampferleitung mit dem Fluideinlass verbunden ist, wobei der Vorwärmer mittels einer fünften Verdampferleitung mit dem Verdampfer oder dem Vorverdampfer verbunden ist, wobei mittels des Vorwärmers Wärme aus einem Abgasstrom des Brenners auf das Arbeitsmedium übertragbar ist, sodass das Arbeitsmedium vor einem Eintritt in den Verdampfer oder den Vorverdampfer vorgewärmt wird. Durch eine derartige Ausgestaltung des Verdampfers wird erreicht, dass ein Brennwert des in dem Brenner verbrannten Brennstoffs nahezu vollständig genutzt werden kann und so der Wirkungsgrad der erfindungsgemäßen Kraft-Wärme-Kopplungsanlage erhöht ist.

Eine vorteilhafte Umsetzung des Erfindungsgedankens sieht vor, dass der Kondensationswärmeübertrager als ein Mischkondensator ausgebildet ist, wobei mittels des Mischkondensators das verdampfte Arbeitsmedium nach einem Durchströmen der Dampfturbine mit flüssigem Arbeitsmedium das den Primärkreislauf und/ oder dem Schmierkreislauf durchströmt hat vermischt wird, sodass das verdampfte Arbeitsmedium kondensiert. Durch eine derartige Ausgestaltung des Kondensators der erfindungsgemäßen Kraft-Wärme-Kopplungsanlage wird es ermöglicht, dass die Kraft-Wärme-Kopplungsanlage besonders kompakt ausgeführt sein kann. In dem Mischkondensator wird der Dampf nach dem Durchströmen der Dampfturbine mit einem Kühlmedium vermischt, sodass der Dampf abgekühlt und kondensiert wird. Besonders bevorzugt ist das Kühlmedium ebenfalls Arbeitsmedium das im Primärkreislauf zirkuliert und bei seinem Eintritt in den Kondensator eine gegenüber dem Arbeitsmedium aus dem Arbeitskreislauf verringerte Temperatur aufweist. Besonders bevorzugt ist der Mischkondensator in der Form einer Dusche oder eines Sprinklers ausgebildet, wobei das Kühlmedium in den mit dem Dampf gefüllten Kondensationsraum eingespritzt wird, wodurch der Dampf und das Kühlmedium vermischt werden und der Dampf kondensiert wird.

Eine derartige Ausgestaltung des Kondensators der erfindungsgemäßen Kraft-Wärme-Kopplungsanlage führt gegenüber den aus dem Stand der Technik bekannten Dampfturbosatz-Kondensator-Anordnungen zwar zu einem verringerten Wirkungsgrad des Dampfturbosatzes, diese Einschränkung ist jedoch vor dem Hintergrund der der Erfindung zugrundeliegenden Aufgabe vernachlässigbar, da, anders als bei den bekannten Kraft-Wärme-Kopplungsanlagen, insbesondere den bekannten Nano-Kraft-Wärme-Kopplungsanlagen, die erfindungsgemäße Kraft-Wärme-Kopplungsanlage nicht auf eine maximale, sondern eine optimale Bereitstellung elektrischer Leistung hin ausgelegt ist.

Eine vorteilhafte Umsetzung des Erfindungsgedankens sieht vor, dass der Kondensator als eine Vakuumeinheit ausgebildet ist, wobei das Kondensatorgehäuse gasdicht ausgestaltet ist und wobei ein von dem Kondensatorgehäuse umschlossenes Gasvolumen einen geringeren Gasdruck aufweist, als ein das Kondensatorgehäuse umgebendes Gasvolumen. Es ist vorgesehen, das bei einem Kondensieren des Dampfes in dem Kondensationsraum ein Unterdruck gegenüber einer den Kondensator umgebenden Atmosphäre entsteht. Dadurch erhöht sich das Energiegefälle sowie der Wirkungsgrad der Anlage. Um einen eventuellen Druckausgleich zwischen dem Kondensationsraum und der Atmosphäre, beispielsweise durch Defekte oder Leckagen, ausgleichen zu können, ist es erfindungsgemäß vorgesehen, dass die Kraft-Wärme-Kopplungsanlage eine Vakuumpumpe zur Verringerung eines Innendrucks des Kondensationsraums aufweist.

Es ist darüber hinaus auch möglich und erfindungsgemäß vorgesehen, dass Hilfsaggregate wie beispielsweise Filter, Sensoren und/ oder Pumpen innerhalb des Kondensatorgehäuses angeordnet sein können. Durch eine derartige Ausgestaltung der erfindungsgemäßen Kraft-Wärme-Kopplungsanlage ist ein Risiko von Leckagen und Druckverlusten vermindert. Des Weiteren ist hierdurch eine Komplexität der Kraft-Wärme-Kopplungsanlage verringert, da eine Anzahl an notwendigen Dichteelemente, beispielsweise für eine Abdichtung von Schlauch- und/ oder Kabeldurchführungen, verringert ist. Darüber hinaus ist durch eine Anordnung von Hilfsaggregaten innerhalb des als Vakuumeinheit ausgeführten Kondensatorgehäuses ein durch die Kraft-Wärme-Kopplungsanlage emittierter Schalldruck verringert.

Eine vorteilhafte Umsetzung des Erfindungsgedankens sieht vor, dass die Kraft-Wärme-Kopplungsanlage eine Stromversorgungseinrichtung aufweist, wobei die Stromversorgungseinrichtung elektrisch leitend mit dem Generator verbunden ist und wobei mittels der Stromversorgungseinrichtung ein Generatorstrom derart umwandel- und/ oder umspannbar ist, dass durch die Stromversorgungseinrichtung ein Nutzstrom zur Verfügung gestellt werden kann. Es ist erfindungsgemäß Vorgesehen, dass Eigenschaften des Nutzstroms an Erfordernisse eines Nutzers anpassbar sind. So kann beispielsweise eine Spannung des Nutzstroms 230 V oder 110 V betragen. Neben der Spannung kann auch eine Frequenz des Nutzstroms variiert werden, sodass es möglich ist sowohl Wechselspannung, beispielsweise mit einer Frequenz von 50 HZ, als auch Gleichspannung zu Verfügung zu stellen.

Eine vorteilhafte Ausgestaltung der Erfindung sieht vor, dass die Stromversorgungseinrichtung einen Gleichrichter, zumindest ein elektrisches Speicherelement, einen Wechselrichter sowie einen Energieverteiler aufweist, wobei der Gleichrichter, der Wechselrichter und das Speicherelement mittels des Energieverteilers elektrisch leitend miteinander verbunden sind und wobei der Energieverteiler von dem Gleichrichter bereitgestellte elektrische Energie in Abhängigkeit von einem Regelschema zwischen Gleichrichter und Wechselrichter, zwischen Gleichrichter und Speicherelement sowie zwischen Speicherelement und Wechselrichter verteilt. Durch eine derartige Anordnung von Gleichrichter, elektrischem Speicherelement und Wechselrichter wird es ermöglicht, dass mittels der erfindungsgemäßen Kraft-Wärme-Kopplungsanlage ein konstanter Nutzstrom zur Verfügung gestellt werden kann. Es ist vorgesehen, dass in Zeiten niedriger Last das elektrische Speicherelement geladen wird, wobei in Zeiten hoher Last das elektrische Speicherelement entladen wird. Durch eine Pufferwirkung des elektrischen Speicherelements wird es ermöglicht, dass die Kraft-Wärme-Kopplungsanlage in einem möglichst effizienten Betriebszustand betrieben werden kann. Erfindungsgemäß werden als elektrische Speicherelemente Akkumulatoren, Batterien und/oder Kondensatoren verwendet.

Um eine bedarfsgerechte Steuerung und Regelung der Kraft-Wärme-Kopplungsanlage zu ermöglichen, ist es vorgesehen, dass die Stromversorgungseinrichtung eine Regelungseinrichtung aufweist, wobei die Regelungseinrichtung eine Steuerungseinrichtung, eine Datenverarbeitungseinrichtung sowie Sensoren aufweist, wobei die Steuerungseinrichtung zumindest einen Brennstoffaktuator und einen Bypassaktuator aufweist, wobei mittels des Brennstoffaktuators eine Brennstoffzufuhr des Brenners verstellbar ist, wobei mittels des Bypassaktuators das Bypassventil bedienbar ist, wobei die Datenverarbeitungseinrichtung signalleitend mit der Steuerungseinrichtung sowie den Sensoren verbunden ist und wobei mittels der Sensoren Betriebsparameter der Kraft-Wärme-Kopplungsanlage und/ oder eines Versorgungsobjekts detektierbar sind, sodass mittels der Regelungseinrichtung die durch die Kraft-Wärme-Kopplungsanlage bereitgestellte thermische und/ oder elektrische Energie regelbar ist. Es ist auch möglich und erfindungsgemäß vorgesehen, dass die Regelungseinrichtung über die Datenverarbeitungseinrichtung mit einem Datennetz, beispielsweise dem Internet, datenleitend verbunden sein kann, sodass eine Fernsteuerung und/ oder Fernwartung der erfindungsgemäßen Kraft-Wärme-Kopplungsanlage ermöglicht ist.

Die Erfindung betrifft auch ein Verfahren zur Steuerung einer erfindungsgemäßen Kraft-Wärme-Kopplungsanlage wobei in einem Messschritt anhand der Betriebsparameter des Versorgungsobjekts ein thermischer und/ oder elektrischer Bedarf bestimmt wird, wobei in einem auf den Messschritt folgenden Bestimmungsschritt eine thermische und/ oder elektrische Ist-Bereitstellung der Kraft-Wärme-Kopplungsanlage bestimmt wird, wobei in einem auf den Bestimmungsschritt folgenden Auswerteschritt eine Differenz zwischen dem Bedarf und der Ist-Bereitstellung ermittelt wird und wobei in einem auf den Auswerteschritt folgenden Regelungsschritt auf Grundlage der ermittelten Differenz eine thermische und/ oder elektrische Vorgabe-Bereitstellung bestimmt wird und wobei in einem auf den Regelungsschritt folgenden Einstellschritt die Brennstoffzufuhr und/ oder eine Bypassventilstellung anhand von Steuerungsregeln so eingestellt werden, dass die Vorgabe-Bereitstellung erreicht wird. Es ist bevorzugt vorgesehen, dass das erfindungsgemäße Verfahren zur Steuerung der Kraft-Wärme-Kopplungsanlage mittels der Regelungseinrichtung durchgeführt wird. Es ist aber auch möglich, dass das Verfahren unabhängig von einer Regelungseinrichtung manuell oder halbautomatisch durchgeführt werden kann.

Weitere vorteilhafte Ausgestaltungen der erfindungsgemäßen Kraft-Wärme-Kopplungsanlage werden anhand von in den Zeichnungen dargestellten Ausführungsbeispielen erläutert. Es zeigen:
Figur 1 eine schematische Darstellung der erfindungsgemäßen Kraft-Wärme-Kopplungsanlage mit als Schnittansicht dargestellten Kondensator,
Figuren 2 bis 4 schematische Darstellungen von Ausführungsbeispielen der erfindungsgemäßen Kraft-Wärme-Kopplungsanlage und
Figur 5 eine schematische Darstellung des erfindungsgemäßen Verfahrens zu Steuerung der Kraft-Wärme-Kopplungsanlage.

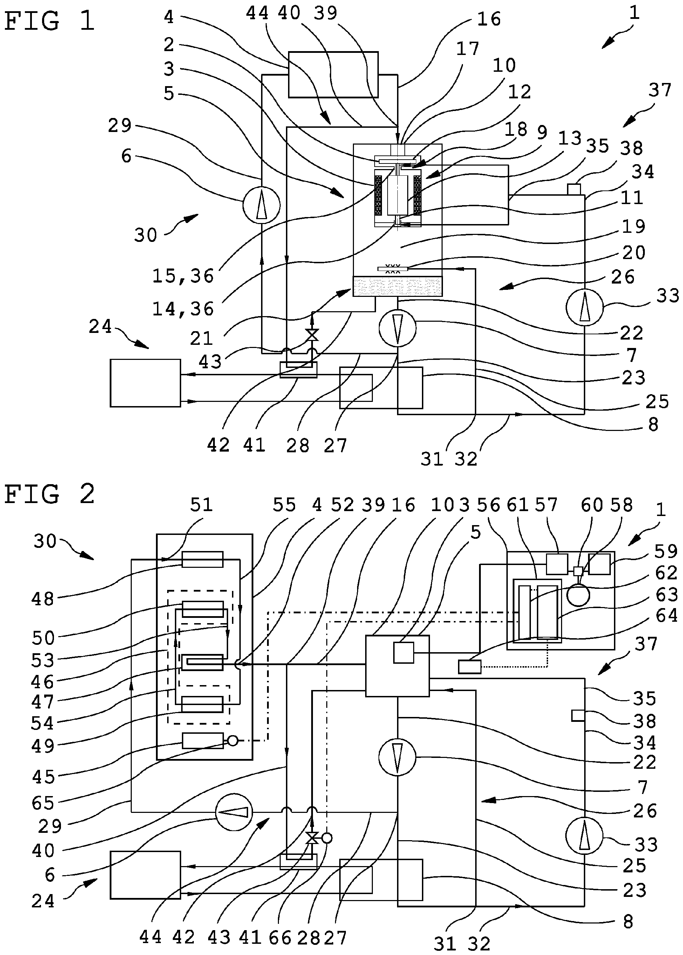

In Figur 1 ist eine schematische Darstellung einer erfindungsgemäßen Kraft-Wärme-Kopplungsanlage 1 gezeigt. Mittels der dargestellten Kraft-Wärme-Kopplungsanlage 1 ist chemische Energie eines Brennstoffs in thermische und elektrische Energie zur Versorgung eines Versorgungsobjekts, beispielsweise eines Wohnhauses, umwandelbar.

Die Kraft-Wärme-Kopplungsanlage 1 weist eine Dampfturbine 2 sowie einen mit der Dampfturbine 2 in Wirkverbindung stehenden Generator 3, einen Dampferzeuger 4 zum Verdampfen eines Arbeitsmediums, einen Kondensator 5 zum Kondensieren des Arbeitsmediums, eine Speisepumpe 6, eine Primärpumpe 7 sowie einen Nutzwärmeübertrager 8 auf. Der Dampferzeuger 4 der dargestellten Kraft-Wärme-Kopplungsanlage 1 wird mittels eines Brenngases befeuert, wobei der für eine Verbrennung notwendige Sauerstoff einer Umgebungsluft entnommen wird.

Die Dampfturbine 2 und der Generator 3 sind zu einem Dampfturbosatz 9 zusammengeschlossen. Der Dampfturbosatz 9 ist innerhalb eines Kondensatorgehäuses 10 des Kondensators 5 angeordnet und weist eine einzelne Antriebswelle 11 auf. Die Dampfturbine 2 und der Generator 3 sind mittels der Antriebswelle 11 unmittelbar mechanisch miteinander gekoppelt, wobei auf der Antriebswelle 11 sowohl eine Beschaufelung 12 der Dampfturbine, als auch ein Rotor 13 des Generators angeordnet ist. Die Antriebswelle 11 des Dampfturbosatz 9 ist mittels einer Kombination aus Festlagern 14 und Loslagern 15 drehbar gelagert. Die Lagerelemente der Lager 14, 15 sind als Gleitlager ausgebildet, wobei eine Schmierung der Lagerelemente mittels des Arbeitsmediums erfolgt.

Der Dampferzeuger 4 der dargestellten Ausführungsform der erfindungsgemäßen Kraft-Wärme-Kopplungsanlage 1 ist mittels einer ersten Dampfleitung 16 mit einem Einlass 17 der Dampfturbine 2 verbunden. In dem Dampferzeuger 4 wird das Arbeitsmedium verdampft. Der in dem Dampferzeuger 4 erzeugte Dampf wird von dem Dampferzeuger 4 durch den Einlass 17 in die Dampfturbine 2 eingeleitet. Die Dampfturbine 2 wird mittels des Dampfs angetrieben und weist einen Auslass 18 auf, der zu einem von dem Kondensatorgehäuse 10 umschlossenen Kondensationsraum 19 des Kondensators 5 hin offen ist. Das Arbeitsmedium tritt nach dem Antreiben der Dampfturbine 2 durch den Auslass 18 aus der Dampfturbine 2 aus und tritt unmittelbar in den Kondensationsraum 19 ein. Der Kondensator 5 ist als eine Vakuumeinheit ausgebildet. Ein von dem Kondensatorgehäuse 10 umschlossenes Gasvolumen weist ein geringeren Gasdruck auf, als ein das Kondensatorgehäuse 10 umgebendes Gasvolumen.

In dem Kondensationsraum 19 ist ein als ein Mischkondensator ausgebildeter Kondensationswärmeübertrager 20 angeordnet. Der Dampf wird mittels des als Mischkondensator ausgebildeten Kondensationswärmeübertragers 20 kondensiert und sammelt sich in einem Reservoir 21 des Kondensators 5. Das Reservoir 21 ist über eine erste Fluidleitung 22 mit der Primärpumpe 7 verbunden. Die Primärpumpe 7 ist bei der dargestellten Ausführungsform der erfindungsgemäßen Kraft-Wärme-Kopplungsanlage 1 unterhalb des Reservoirs 21 angeordnet, sodass die Primärpumpe 7 einen hydrostatischen Druck des Arbeitsmediums als geodätischen Vorlauf nutzen kann.

Die Primärpumpe 7 ist über eine zweite Fluidleitung 23 mit dem Nutzwärmeübertrager 8 verbunden. Der Nutzwärmeübertrager 8 ist thermisch mit einem Sekundärkreislauf 24 gekoppelt, sodass mittels des Nutzwärmeübertragers 8 Wärme von dem Arbeitsmedium auf ein in dem Sekundärkreislauf 24 zirkulierendes Heizmedium übertragen wird. Mittels des Heizmediums kann das Versorgungsobjekt beheizt und/ oder mit Warmwasser versorgt werden.

Der Nutzwärmeübertrager 8 ist über eine dritte Fluidleitung 25 mit dem Kondensator 5 verbunden, sodass das Arbeitsmedium zumindest teilweise in einem aus Kondensator 5, erster Fluidleitung 22, Primärpumpe 7, zweiter Fluidleitung 23, Nutzwärmeübertrager 8 und dritter Fluidleitung 25 gebildeten Primärkreislauf 26 zirkulieren kann. Die zweite Fluidleitungen 23 weist einen Saugabzweig 27 für die Speisepumpe 6 auf, wobei der Saugabzweig 27 mittels einer vierten Fluidleitung 28 mit einem Sauganschluss der Speisepumpe 6 verbunden ist. Die Speisepumpe 6 weist einen Druckanschluss auf, der über eine fünfte Fluidleitung 29 mit dem Dampferzeuger 4 verbunden ist. Mittels der Speisepumpe 6 kann das Arbeitsmedium zumindest teilweise aus dem Primärkreislauf 26 in den Dampferzeuger 4 gepumpt werden kann und zirkuliert dadurch zumindest teilweise in einem aus Kondensator 5, erster Fluidleitung 22, Primärpumpe 7, zweiter Fluidleitung 23, Saugabzweig 27, vierter Fluidleitung 28, Speisepumpe 6, fünfter Fluidleitung 29, Dampferzeuger 4 und erster Dampfleitung 16 gebildeten Arbeitskreislauf 30. Der Dampfturbosatz 9 der dargestellten Ausführungsform einer erfindungsgemäßen Kraft-Wärme-Kopplungsanlage 1 weist eine maximale elektrische Leistung von 3.000 Watt auf. Durch eine derartige Ausgestaltung des Arbeitskreislaufs 30 fördert die Speisepumpe 6 noch heißes Arbeitsmedium in den Dampferzeuger 4 wodurch ein Wirkungsgrad der Kraft-Wärme-Kopplungsanlage 1 bei der Bereitstellung elektrischer Energie erhöht ist.

Bei der gezeigten Kraft-Wärme-Kopplungsanlage 1 weist die dritte Fluidleitung 25 einen Schmierabzweig 31 auf, der mittels einer sechsten Fluidleitung 32 mit einem Pumpeneingang einer Schmierpumpe 33 verbunden ist. Ein Pumpenausgang der Schmierpumpe 33 ist über eine siebte Fluidleitung 34 mit Schmierzuleitung 35 der Lagerelemente der Lager 14, 15 verbunden, wobei die Lagerelemente einen Schmierauslass 36 aufweisen. Durch den Schmierauslass 36 wird das als Schmiermittel verwendete Arbeitsmedium nach einem Schmieren des Lagerelements zu einer Kühlung des Generators 3 genutzt und anschließend in das Reservoir 21 des Kondensators 5 eingeleitet. Das Arbeitsmedium zirkuliert somit zumindest teilweise in einem durch dritte Fluidleitung 25, Schmierabzweig 31, sechsten Fluidleitung 32, Schmierpumpe 33, siebte Fluidleitung 34, Lagerelemente der Lager 14, 15, Generator 3 und Kondensator 5 gebildeten Schmierkreislauf 37. In dem Schmierkreislauf 37 ist ein Hydrospeicher 38 angeordnet, der mittels der Schmierpumpe 33 mit dem Arbeitsmedium befüllt wird. Mittels des in dem Hydrospeicher 38 gespeicherten Arbeitsmediums können bei einer Fehlfunktion innerhalb der Kraft-Wärme-Kopplungsanlage 1, beispielsweise bei einem Ausfall der Schmierpumpe 33, die Lagerelemente der Lager 14, 15 bis zu einem Stillstand des Dampfturbosatzes 9 geschmiert werden, sodass ein Notlauf des Dampfturbosatzes 9 durchgeführt werden kann.

Bei der gezeigten Kraft-Wärme-Kopplungsanlage 1 weist die erste Dampfleitung 16 einen Bypassabzweig 39 auf, der mittels einer zweiten Dampfleitung 40 mit einem Bypasswärmeübertrager 41 verbunden ist. Der Bypasswärmeübertrager 41 ist thermisch mit dem Sekundärkreislauf 24 gekoppelt, sodass mittels des Bypasswärmeübertragers 41 Wärme von dem Arbeitsmedium auf das in dem Sekundärkreislauf 24 zirkulierende Heizmedium übertragbar ist. Der Bypasswärmeübertrager 41 ist mittels einer achten Fluidleitung 42 mit dem Kondensator 5 verbunden. Die achte Fluidleitung 42 weist ein als Magnetventil ausgebildetes Bypassventil 43 auf. Bei geöffnetem Bypassventil 43 zirkuliert das Arbeitsmedium zumindest teilweise in einem zumindest aus Dampferzeuger 4, erster Dampfleitung 16, Bypassabzweig 39, zweiter Dampfleitung 40, Bypasswärmeübertrager 41, achter Fluidleitung 42, Kondensator 5, erster Fluidleitung 22, Primärpumpe 7, Saugabzweig 27, vierter Fluidleitung 28, Speisepumpe 6 und fünfter Fluidleitung 29 gebildetem Bypasskreislauf 44, sodass bei geöffnetem Bypassventil 43 ein Durchströmen der Dampfturbine 2 mit verdampftem Arbeitsmedium zumindest verringert ist und so durch den Dampfturbosatz 9 weniger elektrische Leistung bereitgestellt wird.

Anders als in Figur 1 ist bei der in Figur 2 gezeigten Darstellung der erfindungsgemäßen Kraft-Wärme-Kopplungsanlage 1 auch eine schematische Darstellung des Dampferzeugers 4 gezeigt. Der Dampferzeuger 4 weist einen Brenner 45 zum Verbrennen des Brennstoffs, einen Verdampfer 46, einen Überhitzer 47 sowie einen Vorwärmer 48 auf. Der Vorwärmer 48 ist mittels einer ersten Verdampferleitung 51 mit einem Fluideinlass des Dampferzeugers 4 verbunden. Der Überhitzer 47 ist mittels einer zweiten Verdampferleitung 52 mit einem Fluidauslass des Dampferzeugers verbunden. Der Verdampfer 46 ist mittels einer dritten Verdampferleitung 53 mit dem Überhitzer verbunden. Der Verdampfer 46 weist einen Vorverdampfer 49 und einen Hauptverdampfer 50 auf, wobei der Vorverdampfer 49 und der Hauptverdampfer 50 mittels einer vierten Verdampferleitung 54 miteinander verbunden sind. Der Verdampfer 46 und der Vorwärmer 48 sind mittels einer fünften Verdampferleitung 55 miteinander verbunden. Das Arbeitsmedium tritt durch den Fluideinlass in den Dampferzeuger 4 ein und wird zunächst mittels des Vorwärmers 48 vorgewärmt, indem Wärme aus einem Abgasstrom des Brenners 45 auf das Arbeitsmedium übertragen wird. Nach dem Vorwärmen tritt das Arbeitsmedium in den Verdampfer 46 ein. In dem Vorverdampfer 49 wird durch den Brenner 45 eine höhere Wärmestromdichte bereitgestellt, als im Hauptverdampfer 50, sodass das Arbeitsmedium in dem Vorverdampfer 49 zunächst auf seine Siedetemperatur erhitzt und teilweise verdampft wird um anschließend in dem Hauptverdampfer 50 vollständig verdampft zu werden. In dem Überhitzer 47 wird das Arbeitsmedium anschließend über seine Siedetemperatur hinaus erhitzt, sodass mittels des Dampferzeugers 4 das Arbeitsmedium verdampft und zu einem Heißdampf überhitzt werden kann.

Die dargestellte Ausführungsform der Kraft-Wärme-Kopplungsanlage 1 weist eine Stromversorgungseinrichtung 56 auf, die elektrisch leitend mit dem Generator 3 verbunden ist. Mittels der Stromversorgungseinrichtung 56 wird ein Generatorstrom derart umgewandelt und umgespannt, dass durch die Stromversorgungseinrichtung 56 ein Nutzstrom mit einer Spannung von 230 V und einer Frequenz von 50 Hz zur Verfügung gestellt wird. Hierzu weist die Stromversorgungseinrichtung 56 einen Gleichrichter 57, ein elektrisches Speicherelement 58, einen Wechselrichter 59 sowie einen Energieverteiler 60 auf. Der Gleichrichter 57, der Wechselrichter 59 und das Speicherelement 58 sind mittels des Energieverteilers 60 elektrisch leitend miteinander verbunden. Der Energieverteiler 60 verteilt die von dem Gleichrichter 57 bereitgestellte elektrische Energie in Abhängigkeit von einem Regelschema zwischen Gleichrichter 57 und Wechselrichter 59, zwischen Gleichrichter 57 und Speicherelement 58 sowie zwischen Speicherelement 58 und Wechselrichter 59, sodass eine durchgehende Versorgung des Versorgungsobjekts mit elektrischer Energie sichergestellt ist.

Die Stromversorgungseinrichtung 56 weist auch eine Regelungseinrichtung 61 auf, wobei die Regelungseinrichtung 61 eine Steuerungseinrichtung 62, eine Datenverarbeitungseinrichtung 63 sowie Sensoren 64 aufweist. Die Datenverarbeitungseinrichtung 63 ist signalleitend mit der Steuerungseinrichtung 62 sowie den Sensoren 64 verbunden. Mittels der Sensoren 64 sind sowohl Betriebsparameter der Kraft-Wärme-Kopplungsanlage 1, als auch des Versorgungsobjekts detektierbar.

Die Steuerungseinrichtung 62 weist auch einen Brennstoffaktuator 65 und einen Bypassaktuator 66 auf. Mittels des Brennstoffaktuators 65 ist eine Brennstoffzufuhr des Brenners 45 verstellbar. Mittels des Bypassaktuators 66 ist das Bypassventil 43 bedienbar. Durch eine derartige Ausgestaltung der erfindungsgemäßen Kraft-Wärme-Kopplungsanlage 1 wird erreicht, dass mittels der Regelungseinrichtung 61 die durch die Kraft-Wärme-Kopplungsanlage 1 bereitgestellte thermische und elektrische Energie regelbar ist.

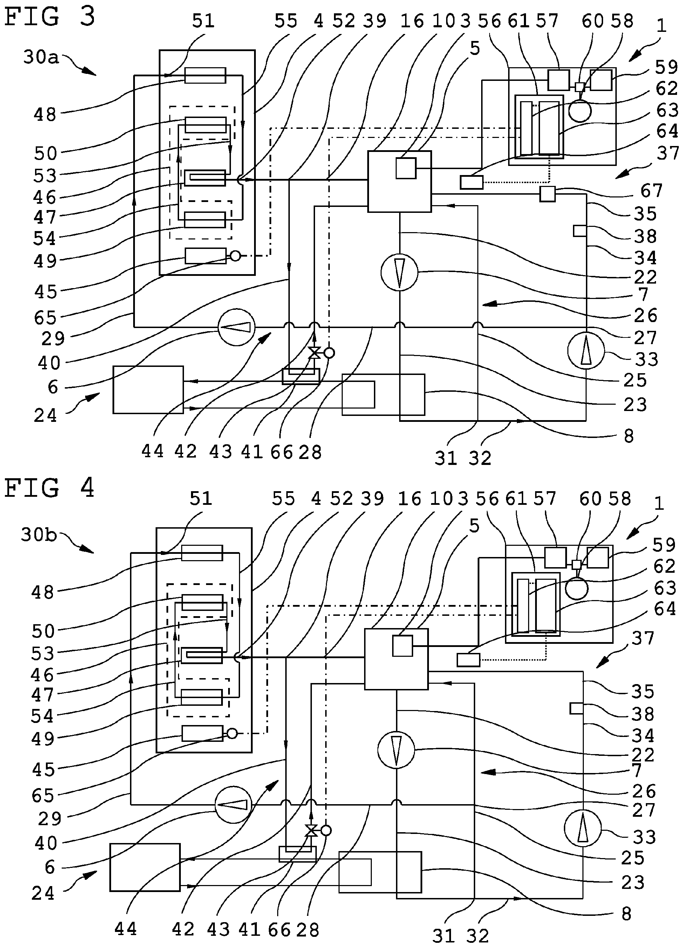

Anders als bei den in den Figuren 1 und 2 gezeigten Ausführungsformen der erfindungsgemäßen Kraft-Wärme-Kopplungsanlage 1 weist bei der in Figur 3 gezeigten Kraft-Wärme-Kopplungsanlage 1 die siebte Fluidleitung 34 den Saugabzweig 27 zur Speisepumpe 6 auf, sodass das Arbeitsmedium zumindest teilweise in einem aus Kondensator 5 , erster Fluidleitung 22, Primärpumpe 7, zweiter Fluidleitung 23, Nutzwärmeübertrager 8, sechster Fluidleitung 32, Schmierpumpe 33, siebter Fluidleitung 34, Saugabzweig 27, vierter Fluidleitung 28, Speisepumpe 6, fünfter Fluidleitung 29, Dampferzeuger 4 und erster Dampfleitung 16 gebildeten Arbeitskreislauf 30a zirkuliert.

Anders als die in den Figuren 1 und 2 dargestellten Ausführungsformen der erfindungsgemäßen Kraft-Wärme-Kopplungsanlage 1 weist die in der Figur 3 dargestellte Kraft-Wärme-Kopplungsanlage 1 einen stromaufwärts der als hydrodynamische Lager ausgeführten Lager 14, 15 einen Druckminderer 67 auf. Mittels des Druckminderers 67 wird ein Druck des als Schmiermittel verwendeten Arbeitsmediums konstant gehalten.

Anders als bei den in den Figuren 1 bis 3 gezeigten Ausführungsformen der erfindungsgemäßen Kraft-Wärme-Kopplungsanlage 1 weist bei der in Figur 4 gezeigten Kraft-Wärme-Kopplungsanlage 1 die dritte Fluidleitung 25 den Saugabzweig 27 zur Speisepumpe 6 auf, sodass das Arbeitsmedium zumindest teilweise in einem aus Kondensator 5, erster Fluidleitung 22, Primärpumpe 7, zweiter Fluidleitung 23, Nutzwärmeübertrager 8, dritter Fluidleitung 25, Saugabzweig 27, vierter Fluidleitung 28, Speisepumpe 6, fünfter Fluidleitung 29, Dampferzeuger 4 und erster Dampfleitung 16 gebildeten Arbeitskreislauf 30b zirkuliert. Bei einer derartigen Ausgestaltung des Arbeitskreislaufs 30b ist das Arbeitsmedium nach einem Durchströmen des Nutzwärmeübertrager 8 weitestgehend abgekühlt wodurch eine Brennwertausnutzung des Brennstoffs gesteigert ist. Das Speicherelement 58 wird beim Lastwechsel vorteilhafterweise so genutzt, dass die Selbstverbrauchsquote des Stromes am höchsten ist. Die Drehzahl des Dampfturbosatzes 9 wird beim Lastwechsel vorteilhafterweise an die jeweilige Last angepasst und konstant gehalten.

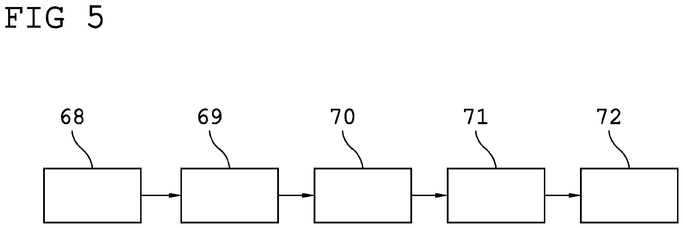

In Figur 5 ist schematisch ein Verfahren zur Steuerung einer erfindungsgemäßen Kraft-Wärme-Kopplungsanlage gezeigt. In einem Messschritt 68 wird anhand der Betriebsparameter des Versorgungsobjekts ein thermischer und/ oder elektrischer Bedarf bestimmt. In einem auf den Messschritt 68 folgenden Bestimmungsschritt 69 wird eine thermische und/ oder elektrische Ist-Bereitstellung der Kraft-Wärme-Kopplungsanlage bestimmt. In einem auf den Bestimmungsschritt 69 folgenden Auswerteschritt 70 wird eine Differenz zwischen dem Bedarf und der Ist-Bereitstellung ermittelt. In einem auf den Auswerteschritt 70 folgenden Regelungsschritt 71 wird auf Grundlage der ermittelten Differenz eine thermische und/ oder elektrische Vorgabe-Bereitstellung bestimmt. In einem auf den Regelungsschritt 71 folgenden Einstellschritt 72 werden die Brennstoffzufuhr und/ oder eine Bypassventilstellung anhand von Steuerungsregeln so eingestellt werden, dass die Vorgabe-Bereitstellung erreicht wird.

### BEZUGSZEICHENLISTE

- 1.: Kraft-Wärme-Kopplungsanlage
- 2.: Dampfturbine
- 3.: Generator
- 4.: Dampferzeuger
- 5.: Kondensator
- 6.: Speisepumpe
- 7.: Primärpumpe
- 8.: Nutzwärmeübertrager
- 9.: Dampfturbosatz
- 10.: Kondensatorgehäuse
- 11.: Antriebswelle
- 12.: Beschaufelung
- 13.: Rotor
- 14.: Festlager
- 15.: Loslager
- 16.: erste Dampfleitung
- 17.: Einlass
- 18.: Auslass
- 19.: Kondensationsraum
- 20.: Kondensationswärmeübertrager
- 21.: Reservoir
- 22.: erste Fluidleitung
- 23.: zweite Fluidleitung
- 24.: Sekundärkreislauf
- 25.: dritte Fluidleitung
- 26.: Primärkreislauf
- 27.: Saugabzweig
- 28.: vierte Fluidleitung
- 29.: fünfte Fluidleitung
- 30,: 30a, 30b Arbeitskreislauf
- 31.: Schmierabzweig
- 32.: sechste Fluidleitung
- 33.: Schmierpumpe
- 34.: siebte Fluidleitung
- 35.: Schmierzuleitung
- 36.: Schmierauslass
- 37.: Schmierkreislauf
- 38.: Hydrospeicher
- 39.: Bypassabzweig
- 40.: zweite Dampfleitung
- 41.: Bypasswärmeübertrager
- 42.: achte Fluidleitung
- 43.: Bypassventil
- 44.: Bypasskreislauf
- 45.: Brenner
- 46.: Verdampfer
- 47.: Überhitzer
- 48.: Vorwärmer
- 49.: Vorverdampfer
- 50.: Hauptverdampfer
- 51.: erste Verdampferleitung
- 52.: zweite Verdampferleitung
- 53.: dritte Verdampferleitung
- 54.: vierte Verdampferleitung
- 55.: fünfte Verdampferleitung
- 56.: Stromversorgungs-einrichtung
- 57.: Gleichrichter
- 58.: elektrisches Speicherelement
- 59.: Wechselrichter
- 60.: Energieverteiler
- 61.: Regelungseinrichtung
- 62.: Steuerungseinrichtung
- 63.: Datenverarbeitungs-einrichtung
- 64.: Sensoren
- 65.: Brennstoffaktuator
- 66.: Bypassaktuator
- 67.: Druckminderer
- 68.: Messschritt
- 69.: Bestimmungsschritt
- 70.: Auswerteschritt
- 71.: Regelungsschritt
- 72.: Einstellschritt

## Patentansprüche

1. Kraft-Wärme-Kopplungsanlage (1) zur Umwandlung chemischer Energie eines Brennstoffs in thermische und elektrische Energie, wobei die Kraft-Wärme-Kopplungsanlage (1) einen Dampfturbosatz (9), einen Dampferzeuger (4) zum Verdampfen eines Arbeitsmediums, einen Kondensator (5) zum Kondensieren des Arbeitsmediums, eine Speisepumpe (6), eine Primärpumpe (7) sowie einen Nutzwärmeübertrager (8) aufweist, wobei der Dampfturbosatz (9) eine Dampfturbine (2) sowie einen mit der Dampfturbine (2) in Wirkverbindung stehenden Generator (3) aufweist, wobei der Dampferzeuger (4) mittels des Brennstoffs befeuerbar ist, wobei der Dampfturbosatz (9) innerhalb eines Kondensatorgehäuses (10) des Kondensators (5) angeordnet ist, wobei der Dampferzeuger (4) mittels einer ersten Dampfleitung (16) mit einem Einlass (17) der Dampfturbine (2) verbunden ist, sodass das verdampfte Arbeitsmedium von dem Dampferzeuger (4) durch den Einlass (17) in die Dampfturbine (2) einleitbar ist, wobei die Dampfturbine (2) mittels des verdampften Arbeitsmediums antreibbar ist, wobei die Dampfturbine (2) einen Auslass (18) aufweist, der zu einem von dem Kondensatorgehäuse (10) umschlossenen Kondensationsraum (19) des Kondensators (5) hin offen ist, sodass das Arbeitsmedium nach dem Antreiben der Dampfturbine (2) aus der Dampfturbine (2) austreten und unmittelbar in den Kondensationsraum (19) eintreten kann, wobei der Kondensationsraum (19) mit zumindest einem Kondensationswärmeübertrager (20) thermisch gekoppelt ist, wobei das Arbeitsmedium mittels des Kondensationswärmeübertragers (20) kondensiert wird, wobei der Kondensator (5) ein Reservoir (21) aufweist, in dem sich das kondensierte Arbeitsmedium sammelt, wobei das Reservoir (21) über eine erste Fluidleitung (22) mit der Primärpumpe (7) verbunden ist, wobei die Primärpumpe (7) über eine zweite Fluidleitung (23) mit dem Nutzwärmeübertrager (8) verbunden ist, wobei mittels des Nutzwärmeübertragers (8) Wärme von dem Arbeitsmedium auf ein in einem Sekundärkreislauf (24) zirkulierendes Heizmedium übertragbar ist, wobei der Nutzwärmeübertrager (8) über eine dritte Fluidleitung (25) mit dem Kondensator (5) verbunden ist, sodass das Arbeitsmedium zumindest teilweise in einem aus Kondensator (5), erster Fluidleitung (22), Primärpumpe (7), zweiter Fluidleitung (23), Nutzwärmeübertrager (8) und dritter Fluidleitung (25) gebildeten Primärkreislauf (26) zirkulieren kann, wobei eine der Fluidleitungen einen Saugabzweig (27) für die Speisepumpe (6) aufweist, wobei der Saugabzweig (27) mittels einer vierten
Fluidleitung (28) mit einem Sauganschluss der Speisepumpe (6) verbunden ist, wobei die Speisepumpe (6) einen Druckanschluss aufweist, wobei der Druckanschluss über eine fünfte Fluidleitung (29) mit dem
Dampferzeuger (4) verbunden ist, sodass mittels der Speisepumpe (6) das Arbeitsmedium zumindest teilweise aus dem Primärkreislauf (26) in den Dampferzeuger (4) gepumpt werden kann und wobei das Arbeitsmedium zumindest teilweise in einem aus Kondensator (5), erster Fluidleitung (22), Primärpumpe (7), zweiter Fluidleitung (23),
Saugabzweig (27), vierter Fluidleitung (28),
Speisepumpe (6), fünfter Fluidleitung (29),
Dampferzeuger (4) und erster Dampfleitung (16) gebildetem Arbeitskreislauf (30) zirkulieren kann.

2. Kraft-Wärme-Kopplungsanlage (1) nach Anspruch 1, **dadurch gekennzeichnet, dass** der Dampfturbosatz (9) maximale elektrische Leistung von höchstens 3000 Watt, bevorzugt von höchstens 2000 Watt und besonders bevorzugt von höchstens 1000 Watt aufweist.

3. Kraft-Wärme-Kopplungsanlage (1) nach einem der Ansprüche 1 oder 2, **dadurch gekennzeichnet, dass** die elektrische Leistung des Dampfturbosatzes (9) in einem Bereich von 0 bis 3000 Watt, bevorzugt von 0 bis 2000 Watt und besonders bevorzugt von 0 bis 1000 Watt regelbar ist.

4. Kraft-Wärme-Kopplungsanlage (1) nach einem der Ansprüche 1 bis 3, **dadurch gekennzeichnet, dass** der
Dampfturbosatz (9) eine einzelne Antriebswelle (11) aufweist, wobei die Dampfturbine (2) und der Generator (3) mittels der Antriebswelle (11) unmittelbar mechanisch miteinander gekoppelt sind.

5. Kraft-Wärme-Kopplungsanlage (1) nach einem der Ansprüche 1 bis 4, **dadurch gekennzeichnet, dass** der
Dampfturbosatz (9) Lagerelemente zur Lagerung rotierender Bauteile aufweist, wobei die Lagerelemente zumindest teilweise als hydrodynamische Lager ausgebildet sind.

6. Kraft-Wärme-Kopplungsanlage (1) nach einem der Ansprüche 1 bis 5, **dadurch gekennzeichnet, dass** der
Dampfturbosatz (9) Lagerelemente zur Lagerung rotierender Bauteile aufweist, wobei die Lagerelemente zumindest teilweise als Gleitlager ausgebildet sind, wobei die Gleitlager mittels des Arbeitsmediums schmierbar sind.

7. Kraft-Wärme-Kopplungsanlage (1) nach einem der Ansprüche 5 oder 6, **dadurch gekennzeichnet, dass** die dritte Fluidleitung (25) einen Schmierabzweig (31) aufweist, wobei der Schmierabzweig (31) mittels einer sechsten Fluidleitung (32) mit einem Pumpeneingang einer Schmierpumpe (33) verbunden ist, wobei die Schmierpumpe (33) einen Pumpenausgang aufweist, der über eine siebte Fluidleitung (34) mit zumindest einer Schmierzuleitung (35) zumindest eines Lagerelements verbunden ist, wobei das Lagerelement einen Schmierauslass (36) aufweist und wobei durch den Schmierauslass (36) Fluid nach einem Schmieren des Lagerelements direkt oder indirekt in das Reservoir (21) des Kondensator (5) einleitbar ist, sodass das Arbeitsmedium zumindest teilweise in einem durch dritte Fluidleitung (25), Schmierabzweig (31), sechsten Fluidleitung (32), Schmierpumpe (33), siebte Fluidleitung (34), Lagerelement und Kondensator (5) gebildeten Schmierkreislauf (37) zirkuliert.

8. Kraft-Wärme-Kopplungsanlage (1) nach Anspruch 7, **dadurch gekennzeichnet, dass** die siebte Fluidleitung (34) den Saugabzweig (27) zur Speisepumpe (6) aufweist, sodass das Arbeitsmedium zumindest teilweise in einem aus Kondensator (5), erster Fluidleitung (22), Primärpumpe (7), zweiter Fluidleitung (23), Nutzwärmeübertrager (8), dritter Fluidleitung (25), Schmierabzweig (31), sechster Fluidleitung (32), Schmierpumpe (33), siebter Fluidleitung (34), Saugabzweig (27), vierter Fluidleitung (28), Speisepumpe (6), fünfter Fluidleitung (29), Dampferzeuger (4) und erster Dampfleitung (16) gebildeten Arbeitskreislauf (30a) zirkuliert.

9. Kraft-Wärme-Kopplungsanlage (1) nach einem der Ansprüche 1 bis 8, **dadurch gekennzeichnet, dass** die erste Dampfleitung (16) einen Bypassabzweig (39) aufweist, wobei der Bypassabzweig (39) mittels einer zweiten Dampfleitung (40) mit einem Bypasswärmeübertrager (41) verbunden ist, wobei mittels des Bypasswärmeübertragers (41) Wärme von dem Arbeitsmedium auf das in dem Sekundärkreislauf (24) zirkulierende Heizmedium übertragbar ist, wobei der Bypasswärmeübertrager (41) mittels einer achten Fluidleitung (42) mit dem Kondensator (5) verbunden ist, wobei die achte Fluidleitung (42) ein Bypassventil (43) aufweist, wobei das Arbeitsmedium nur bei geöffnetem Bypassventil (43) in einem zumindest aus Dampferzeuger (4), erster Dampfleitung (16), Bypassabzweig (39), zweiter Dampfleitung (40), Bypasswärmeübertrager (41), achter Fluidleitung (42), Kondensator (5), erster Fluidleitung (22), Primärpumpe (7), Saugabzweig (27), vierter Fluidleitung (28), Speisepumpe (6) und fünfter Fluidleitung (29) gebildeten Bypasskreislauf (44) zirkuliert, sodass bei geöffnetem Bypassventil (43) ein Durchströmen der Dampfturbine (2) mit verdampftem Arbeitsmedium zumindest verringert ist und so durch den Dampfturbosatz (9) weniger elektrische Leistung bereitgestellt wird.

10. Kraft-Wärme-Kopplungsanlage (1) nach einem der Ansprüche 1 bis 9, **dadurch gekennzeichnet, dass** der Dampferzeuger (4) einen Brenner (45) zum Verbrennen des Brennstoffs, einen Verdampfer (46) sowie einen Überhitzer (47) aufweist, wobei der Verdampfer (46) mittels einer ersten Verdampferleitung (51) mit einem Fluideinlass des Dampferzeugers (4) verbunden ist, wobei der Überhitzer (47) mittels einer zweiten Verdampferleitung (52) mit einem Dampfauslass des Verdampfers (46) verbunden ist, wobei der Verdampfer (46) mittels einer dritten Verdampferleitung (53) mit dem Überhitzer (47) verbunden ist, wobei das Arbeitsmedium durch den Fluideinlass in den Verdampfer (46) eintritt und zunächst in dem Verdampfer (46) verdampft wird und wobei das verdampfte Arbeitsmedium in dem Überhitzer (47) über eine Siedetemperatur des Arbeitsmediums hinaus erhitzt wird, sodass mittels des Dampferzeugers (4) das Arbeitsmedium zu einem Heißdampf verdampft werden kann.

11. Kraft-Wärme-Kopplungsanlage (1) nach Anspruch 10, **dadurch gekennzeichnet, dass** der Verdampfer (46) einen Vorverdampfer (49) und einen Hauptverdampfer (50) aufweist, wobei der Vorverdampfer (49) mittels der ersten Verdampferleitung (51) mit dem Fluideinlass des Dampferzeugers (4) verbunden ist, wobei der Hauptverdampfer (50) mittels einer vierten Verdampferleitung (54) mit dem Vorverdampfer (49) verbunden ist, wobei der Hauptverdampfer (50) mittels einer dritten Verdampferleitung (53) mit dem Überhitzer (47) verbunden ist, wobei durch den Brenner (45) in dem Vorverdampfer (49) eine höhere Wärmestromdichte bereitgestellt wird, als in dem Hauptverdampfer (50), sodass das Arbeitsmedium in dem Vorverdampfer (49) zunächst auf seine Siedetemperatur erhitzt und teilweise verdampft wird und wobei das Arbeitsmedium anschließend in dem Hauptverdampfer (50) vollständig verdampft wird.

12. Kraft-Wärme-Kopplungsanlage (1) nach einem der Ansprüche 1 bis 11, **dadurch gekennzeichnet, dass** der Kondensationswärmeübertrager (20) als ein Mischkondensator ausgebildet ist, wobei mittels des Mischkondensators das verdampfte Arbeitsmedium nach einem Durchströmen der Dampfturbine (2) mit flüssigem Arbeitsmedium das den Primärkreislauf (26) und/ oder dem Schmierkreislauf (37) durchströmt hat vermischt wird, sodass das verdampfte Arbeitsmedium kondensiert.

13. Kraft-Wärme Kopplungsanlage (1) nach einem der Ansprüche 1 bis 12, **dadurch gekennzeichnet, dass** der Kondensator (5) als eine Vakuumeinheit ausgebildet ist, wobei das Kondensatorgehäuse (10) gasdicht ausgestaltet ist und wobei ein von dem Kondensatorgehäuse (10) umschlossenes Gasvolumen einen geringeren Gasdruck aufweist, als ein das Kondensatorgehäuse (10) umgebendes Gasvolumen.

14. Verfahren zur Steuerung einer Kraft-Wärme-Kopplungsanlage (1) nach Anspruch 13, **dadurch gekennzeichnet, dass** in einem Messschritt (68) anhand der Betriebsparameter des Versorgungsobjekts ein thermischer und/ oder elektrischer Bedarf bestimmt wird, wobei in einem auf den Messschritt (68) folgenden Bestimmungsschritt (69) eine thermische und/ oder elektrische Ist-Bereitstellung der Kraft-Wärme-Kopplungsanlage (1) bestimmt wird, wobei in einem auf den Bestimmungsschritt (69) folgenden Auswerteschritt (70) eine Differenz zwischen dem Bedarf und der Ist-Bereitstellung ermittelt wird und wobei in einem auf den Auswerteschritt (70) folgenden Regelungsschritt (71) auf Grundlage der ermittelten Differenz eine thermische und/ oder elektrische Vorgabe-Bereitstellung bestimmt wird und wobei in einem auf den Regelungsschritt (71) folgenden Einstellschritt (72) die Brennstoffzufuhr und/ oder eine Bypassventilstellung anhand von Steuerungsregeln so eingestellt werden, dass die Vorgabe-Bereitstellung erreicht wird.

## Claims

1. Combined heat and power plant (1) for converting chemical energy of a fuel into thermal and electrical energy, wherein the combined heat and power plant (1) comprises a turbo-generator set (9), a steam generator (4) for vaporising a working fluid, a condenser (5) for condensing the working fluid, a feed pump (6), a primary pump (7) and a useful heat exchanger (8), wherein the turbo-generator set (9) comprises a steam turbine (2) and a generator (3) that is operatively connected to the steam turbine (2), wherein the steam generator (4) can be heated by means of the fuel, wherein the turbo-generator set (9) is arranged inside a condenser housing (10) of the condenser (5), wherein the steam generator (4) is connected, by means of a first steam line (16), to an inlet (17) of the steam turbine (2), such that it is possible to introduce the vaporised working medium, from the steam generator (4), through the inlet (17) and into the steam turbine (2), wherein the steam turbine (2) can be driven by means of the vaporised working fluid, wherein the steam turbine (2) comprises an outlet (18) that is open towards a condensation chamber (19) of the condenser (5) that is enclosed by the condenser housing (10), such that, after driving the steam turbine (2), the working fluid can emerge from the steam turbine (2) and enter directly into the condensation chamber (19), wherein the condensation chamber (19) is thermally coupled to at least one condensation heat exchanger (20), wherein the working fluid is condensed by means of the condensation heat exchanger (20), wherein the condenser (5) comprises a reservoir (21) in which the condensed working fluid collects, wherein the reservoir (21) is connected to the primary pump (7) via a first fluid line (22), wherein the primary pump (7) is connected to the useful heat exchanger (8) via a second fluid line (23), wherein heat can be transferred, by means of the useful heat exchanger (8), from the working fluid to a heating medium circulating in a secondary circuit (24), wherein the useful heat exchanger (8) is connected to the condenser (5) by means of a third fluid line (25) such that the working fluid can circulate, at least in part, in a primary circuit (26) formed of the condenser (5), the first fluid line (22), the primary pump (7), the second fluid line (23), the useful heat exchanger (8) and the third fluid line (25), wherein one of the fluid lines comprises a suction branch (27) for the feed pump (6), wherein the suction branch (27) is connected by means of a fourth fluid line (28) to a suction port of the feed pump (6), wherein the feed pump (6) comprises a pressure port, wherein the pressure port is connected to the steam generator (4) via a fifth fluid line (29), such that the working fluid can be pumped out of the primary circuit (26) and into the steam generator (4), at least in part, by means of the feed pump (6), and wherein the working fluid can circulate, at least in part, in a working circuit (30) formed of the condenser (5), the first fluid line (22), the primary pump (7), the second fluid line (23), the suction branch (27), the fourth fluid line (28), the feed pump (6), the fifth fluid line (29), the steam generator (4), and the first steam line (16).

2. Combined heat and power plant (1) according to claim 1, **characterised in that** the turbo-generator set (9) has a maximum electrical power of at most 3000 Watt, preferably of at most 2000 Watt, and particularly preferably of at most 1000 Watt.

3. Combined heat and power plant (1) according to either claim 1 or claim 2, **characterised in that** the electrical power of the turbo-generator set (9) can be regulated in a range of from 0 to 3000 Watt, preferably from 0 to 2000 Watt, and particularly preferably from 0 to 1000 Watt.

4. Combined heat and power plant (1) according to any of claims 1 to 3, **characterised in that** the turbo-generator set (9) comprises a single drive shaft (11), wherein the steam turbine (2) and the generator (3) are directly mechanically coupled to one another by means of the drive shaft (11).

5. Combined heat and power plant (1) according to any of claims 1 to 4, **characterised in that** the turbo-generator set (9) comprises bearing elements for mounting rotating components, wherein the bearing elements are formed as hydrodynamic bearings, at least in part.

6. Combined heat and power plant (1) according to any of claims 1 to 5, **characterised in that** the turbo-generator set (9) comprises bearing elements for mounting rotating components, wherein the bearing elements are formed as plain bearings, at least in part, wherein the plain bearings can be lubricated by means of the working fluid.

7. Combined heat and power plant (1) according to either claim 5 or claim 6, **characterised in that** the third fluid line (25) comprises a lubrication branch (31), wherein the lubrication branch (31) is connected to a pump inlet of a lubrication pump (33) by means of a sixth fluid line (32), wherein the lubrication pump (33) comprises a pump outlet that is connected to at least one lubrication supply line (35) of at least one bearing element via a seventh fluid line (34), wherein the bearing element comprises a lubrication outlet (36), and wherein fluid, after the lubrication of the bearing element, is directly or indirectly introducible into the reservoir (21) of the condenser (5) through the lubrication outlet (36), such that the working medium circulates at least in part in a lubrication circuit (37) formed by the third fluid line (25), the lubrication branch (31), the sixth fluid line (32), the lubrication pump (33), the seventh fluid line (34), the bearing element, and the condenser (5).

8. Combined heat and power plant (1) according to claim 7, **characterised in that** the seventh fluid line (34) comprises the suction branch (27) to the feed pump (6), such that the working fluid circulates at least in part in a working circuit (30a) formed of the condenser (5), the first fluid line (22), the primary pump (7), the second fluid line (25), the useful heat exchanger (8), the third fluid line (25), the lubrication branch (31), the sixth fluid line (32), the lubrication pump (33), the seventh fluid line (34), the suction branch (27), the fourth fluid line (28), the feed pump (6), the fifth fluid line (29), the steam generator (4), and the first steam line (16).

9. Combined heat and power plant (1) according to any of claims 1 to 8, **characterised in that** the first steam line (16) comprises a bypass branch (39), wherein the bypass branch (39) is connected to a bypass heat exchanger (41) by means of a second steam line (40), wherein heat can be transferred, by means of the bypass heat exchanger (41), from the working fluid to the heating medium circulating in the secondary circuit (24), wherein the bypass heat exchanger (41) is connected to the condenser (5) by means of an eighth fluid line (42), wherein the eighth fluid line (42) comprises a bypass valve (43), wherein the working fluid circulates in a bypass circuit (44) formed at least of the steam generator (4), the first steam line (16), the bypass branch (39), the second steam line (40), the bypass heat exchanger (41), the eighth fluid line (42), the condenser (5), the first fluid line (22), the primary pump (7), the suction branch (27), the fourth fluid line (28), the feed pump (6), and the fifth fluid line (29), only when the bypass valve (43) is open, such that, when the bypass valve (43) is open, a flow of vaporised working fluid through the steam turbine (2) is at least reduced, and thus less electrical power is provided by the turbo-generator set (9).

10. Combined heat and power plant (1) according to any of claims 1 to 9, **characterised in that** the steam generator (4) comprises a burner (45) for burning the fuel, a vaporiser (46), and a superheater (47), wherein the vaporiser (46) is connected to a fluid inlet of the steam generator (4) by means of a first vaporiser line (51), wherein the superheater (47) is connected to a steam outlet of the vaporiser (46) by means of a second vaporiser line (52), wherein the vaporiser (46) is connected to the superheater (47) by means of a third vaporiser line (53), wherein the working fluid enters the vaporiser (46) through the fluid inlet and is firstly vaporised in the vaporiser (46), and wherein the vaporised working fluid is heated, in the superheater (47) to above a boiling temperature of the working fluid, such that the working fluid can be vaporised to superheated steam by means of the steam generator (4).

11. Combined heat and power plant (1) according to claim 10, **characterised in that** the vaporiser (46) comprises a pre-vaporiser (49) and a main vaporiser (50), wherein the pre-vaporiser (49) is connected to the fluid inlet of the steam generator (4) by means of the first vaporiser line (51), wherein the main vaporiser (50) is connected to the pre-vaporiser (49) by means of a fourth vaporiser line (54), wherein the main vaporiser (50) is connected to the superheater (47) by means of a third vaporiser line (53), wherein the burner (45) provides a higher heat flux density in the pre-vaporiser (49) than in the main vaporiser (50), such that the working fluid is first heated to the boiling temperature thereof and partially vaporised, in the pre-vaporiser (49), and wherein the working medium is subsequently completely vaporised in the main vaporiser (50) .

12. Combined heat and power plant (1) according to any of claims 1 to 11, **characterised in that** the condensation heat exchanger (20) is configured as a mixing condenser, wherein, after flowing through the steam turbine (2), the vaporised working fluid is mixed, by means of the mixing condenser, with liquid working fluid that has flowed through the primary circuit (26) and/or the lubrication circuit (37), such that the vaporised working fluid condenses.

13. Combined heat and power plant (1) according to any of claims 1 to 12, **characterised in that** the condenser (5) is formed as a vacuum unit, wherein the condenser housing (10) is designed so as to be gastight, and wherein a gas volume enclosed by the condenser housing (10) has a lower gas pressure than a gas volume surrounding the condenser housing (10).

14. Method for controlling a combined heat and power plant (1) according to claim 13, **characterised in that**, in a measuring step (68), a thermal and/or electrical demand is determined on the basis of the operating parameters of the supply object, wherein, in a determination step (69) that follows the measuring step (68) a thermal and/or electrical actual provision of the combined heat and power plant (1) is determined, wherein, in an evaluation step (70) following the determination step (69) a difference is determined between the demand and the actual provision, and wherein, in a regulation step (71) following the evaluation step (70) a thermal and/or electrical specified provision is ascertained on the basis of the determined difference, and wherein, in a setting step (72) following the regulation step (71), the fuel supply and/or a bypass valve setting is set, on the basis of control rules, in such a way, that the specified provision is achieved.

## Revendications

1. Installation de production combinée de chaleur et d'électricité (1) servant à transformer une énergie chimique d'un combustible en une énergie thermique et électrique, dans laquelle l'installation de production combinée de chaleur et d'électricité (1) présente un groupe turbo-alternateur (9), un générateur de vapeur (4) servant à évaporer un fluide de travail, un condensateur (5) servant à condenser le fluide de travail, une pompe d'alimentation (6), une pompe primaire (7) ainsi qu'un échangeur de chaleur utile (8), dans laquelle le groupe turbo-alternateur (9) présente une turbine à vapeur (2) ainsi qu'un générateur (3) coopérant avec la turbine à vapeur (2), dans lequel le générateur de vapeur (4) peut être alimenté au moyen du combustible, dans laquelle le groupe turbo-alternateur (9) est disposé à l'intérieur d'un boîtier de condensateur (10) du condensateur (5), dans laquelle le générateur de vapeur (4) est relié à une entrée (17) de la turbine à vapeur (2) au moyen d'un premier conduit de vapeur (16) de sorte que le fluide de travail évaporé peut être acheminé par le générateur de vapeur (4) par l'entrée (17) dans la turbine à vapeur (2), dans laquelle la turbine à vapeur (2) peut être entraînée au moyen du fluide de travail évaporé, dans laquelle la turbine à vapeur (2) présente une sortie (18), qui est ouverte en direction d'une chambre de condensation (19), renfermée par le boîtier de condensateur (10) du condensateur (5) de sorte que le fluide de travail peut sortir de la turbine à vapeur (2) après l'entraînement de la turbine à vapeur (2) et peut entrer directement dans la chambre de condensation (19), dans laquelle la chambre de condensation (19) est couplée thermiquement à au moins un échangeur de chaleur de condensation (20), dans laquelle le fluide de travail est condensé au moyen de l'échangeur de chaleur de condensation (20), dans laquelle le condensateur (5) présente un réservoir (21), dans lequel le fluide de travail condensé s'accumule, dans laquelle le réservoir (21) est relié à la pompe primaire (7) par l'intermédiaire d'un premier conduit de fluide (22), dans laquelle la pompe primaire (7) est reliée à l'échangeur de chaleur utile (8) par l'intermédiaire d'un deuxième conduit de fluide (23), dans laquelle de la chaleur peut être transférée depuis le fluide de travail sur un milieu de chauffage circulant dans un circuit secondaire (24) au moyen de l'échangeur de chaleur utile (8), dans laquelle l'échangeur de chaleur utile (8) est relié au condensateur (5) par l'intermédiaire d'un troisième conduit de fluide (25) de sorte que le fluide de travail peut circuler au moins en partie dans un circuit primaire (26) formé du condensateur (5), du premier conduit de fluide (22), de la pompe primaire (7), du deuxième conduit de fluide (23), de l'échangeur de chaleur utile (8) et du troisième conduit de fluide (25), dans laquelle un des conduits de fluide présente un embranchement d'aspiration (27) pour la pompe d'alimentation (6), dans laquelle l'embranchement d'aspiration (27) est relié à un raccord d'aspiration de la pompe d'alimentation (6) au moyen d'un quatrième conduit de fluide (28), dans laquelle la pompe d'alimentation (6) présente un raccord de pression, dans laquelle le raccord de pression est relié au générateur de vapeur (4) par l'intermédiaire d'un cinquième conduit de fluide (29) de sorte que le fluide de travail peut être pompé au moins en partie hors du circuit primaire (26) dans le générateur de vapeur (4) au moyen de la pompe d'alimentation (6) et dans laquelle le fluide de travail peut circuler au moins en partie dans un circuit de travail (30) formé à partir du condensateur (5), du premier conduit de fluide (22), de la pompe primaire (7), du deuxième conduit de fluide (23), de l'embranchement d'aspiration (27), du quatrième conduit de fluide (28), de la pompe d'alimentation (6), du cinquième conduit de fluide (29), du générateur de vapeur (4) et du premier conduit de vapeur (16) .

2. Installation de production combinée de chaleur et d'électricité (1) selon la revendication 1, **caractérisée en ce que** le groupe turbo-alternateur (9) présente une puissance électrique maximale de 3000 watts au maximum, de manière préférée de 2000 watts au maximum et de manière particulièrement préférée de 1000 watts au maximum.

3. Installation de production combinée de chaleur et d'électricité (1) selon l'une quelconque des revendications 1 ou 2, **caractérisée en ce que** la puissance électrique du groupe turbo-alternateur (9) peut être régulée dans une plage de 0 à 3000 watts, de manière préférée de 0 à 2000 watts et de manière particulièrement préférée de 0 à 1000 watts.

4. Installation de production combinée de chaleur et d'électricité (1) selon l'une quelconque des revendications 1 à 3, **caractérisée en ce que** le groupe turbo-alternateur (9) présente un arbre d'entraînement (11) individuel, dans laquelle la turbine à vapeur (2) et le générateur (3) sont couplés directement mécaniquement l'un à l'autre au moyen de l'arbre d'entraînement (11).

5. Installation de production combinée de chaleur et d'électricité (1) selon l'une quelconque des revendications 1 à 4, **caractérisée en ce que** le groupe turbo-alternateur (9) présente des éléments formant paliers servant à supporter des composants rotatifs, dans laquelle les éléments formant paliers sont réalisés au moins en partie en tant que paliers hydrodynamiques.

6. Installation de production combinée de chaleur et d'électricité (1) selon l'une quelconque des revendications 1 à 5, **caractérisée en ce que** le groupe turbo-alternateur (9) présente des éléments formant paliers servant à supporter des composants rotatifs, dans laquelle les éléments formant paliers sont réalisés au moins en partie en tant que paliers à glissement, dans laquelle les paliers à glissement peuvent être lubrifiés au moyen du fluide de travail.

7. Installation de production combinée de chaleur et d'électricité (1) selon l'une quelconque des revendications 5 ou 6, **caractérisée en ce que** le troisième conduit de fluide (25) présente un embranchement de lubrification (31), dans laquelle l'embranchement de lubrification (31) est relié à une entrée de pompe d'une pompe de lubrification (33) au moyen d'un sixième conduit de fluide (32), dans laquelle la pompe de lubrification (33) présente une sortie de pompe, qui est reliée à au moins un conduit d'arrivée de lubrification (35) d'au moins un élément formant palier par l'intermédiaire d'un septième conduit de fluide (34), dans laquelle l'élément formant palier présente une sortie de lubrification (36) et dans laquelle du fluide peut être acheminé directement ou indirectement dans le réservoir (21) du condensateur (5) après une lubrification de l'élément formant palier par la sortie de lubrification (36) de sorte que le fluide de travail circule au moins en partie dans un circuit de lubrification (37) formé par le troisième conduit de fluide (25), l'embranchement de lubrification (31), le sixième conduit de fluide (32), la pompe de lubrification (33), le septième conduit de fluide (34), l'élément formant palier et le condensateur (5).

8. Installation de production combinée de chaleur et d'électricité (1) selon la revendication 7, **caractérisée en ce que** le septième conduit de fluide (34) présente l'embranchement d'aspiration (27) par rapport à la pompe d'alimentation (6) de sorte que le fluide de travail circule au moins en partie dans un circuit de travail (30a) formé à partir du condensateur (5), du premier conduit de fluide (22), de la pompe primaire (7), du deuxième conduit de fluide (23), de l'échangeur de chaleur utile (8), du troisième conduit de fluide (25), de l'embranchement de lubrification (31), du sixième conduit de fluide (32), de la pompe de lubrification (33), du septième conduit de fluide (34), de l'embranchement d'aspiration (27), du quatrième conduit de fluide (28), de la pompe d'alimentation (6), du cinquième conduit de fluide (29), du générateur de vapeur (4) et du premier conduit de vapeur (16).

9. Installation de production combinée de chaleur et d'électricité (1) selon l'une quelconque des revendications 1 à 8, **caractérisée en ce que** le premier conduit de vapeur (16) présente un embranchement de dérivation (39), dans laquelle l'embranchement de dérivation (39) est relié à un échangeur de chaleur de dérivation (41) au moyen d'un deuxième conduit de vapeur (40), dans laquelle de la chaleur peut être transférée depuis le fluide de travail sur le milieu de chauffage circulant dans le circuit secondaire (24) au moyen de l'échangeur de chaleur de dérivation (41), dans laquelle l'échangeur de chaleur de dérivation (41) est relié au condensateur (5) au moyen d'un huitième conduit de fluide (42), dans laquelle le huitième conduit de fluide (42) présente une soupape de dérivation (43), dans laquelle le fluide de travail circule seulement lorsque la soupape de dérivation (43) est ouverte dans un circuit de dérivation (44) formé au moins à partir du générateur de vapeur (4), du premier conduit de vapeur (16), de l'embranchement de dérivation (39), du deuxième conduit de vapeur (40), de l'échangeur de chaleur de dérivation (41), du huitième conduit de fluide (42), du condensateur (5), du premier conduit de fluide (22), de la pompe primaire (7), de l'embranchement d'aspiration (27), du quatrième conduit de fluide (28), de la pompe d'alimentation (6) et du cinquième conduit de fluide (29) de sorte que lorsque la soupape de dérivation (43) est ouverte, un écoulement de fluide de travail évaporé traversant la turbine à vapeur (2) est au moins réduit et ainsi une quantité inférieure de puissance électrique est fournie par le groupe turbo-alternateur (9).

10. Installation de production combinée de chaleur et d'électricité (1) selon l'une quelconque des revendications 1 à 9, **caractérisée en ce que** le générateur de vapeur (4) présente un brûleur (45) servant à brûler le combustible, un évaporateur (46) ainsi qu'un surchauffeur (47), dans laquelle l'évaporateur (46) est relié à une entrée de fluide du générateur de vapeur (4) au moyen d'un premier conduit d'évaporateur (51), dans laquelle le surchauffeur (47) est relié à une sortie de vapeur de l'évaporateur (46) au moyen d'un deuxième conduit d'évaporateur (52), dans laquelle l'évaporateur (46) est relié au surchauffeur (47) au moyen d'un troisième conduit d'évaporateur (53), dans laquelle le fluide de travail entre dans l'évaporateur (46) par l'entrée de fluide et est évaporé dans un premier temps dans l'évaporateur (46) et dans laquelle le fluide de travail évaporé est réchauffé dans le surchauffeur (47) à une température supérieure à une température d'ébullition du fluide de travail de sorte que le fluide de travail peut être évaporé en une vapeur surchauffée au moyen du générateur de vapeur (4).

11. Installation de production combinée de chaleur et d'électricité (1) selon la revendication 10, **caractérisée en ce que** l'évaporateur (46) présente un pré-évaporateur (49) et un évaporateur principal (50), dans laquelle le pré-évaporateur (49) est relié à l'entrée de fluide du générateur de vapeur (4) au moyen du premier conduit d'évaporateur (51), dans laquelle l'évaporateur principal (50) est relié au pré-évaporateur (49) au moyen d'un quatrième conduit d'évaporateur (54), dans laquelle l'évaporateur principal (50) est relié au surchauffeur (47) au moyen d'un troisième conduit d'évaporateur (53), dans laquelle une densité de flux thermique plus élevée est fourni par le brûleur (45) dans le pré-évaporateur (49) que dans l'évaporateur principal (50) de sorte que le fluide de travail est réchauffé dans le pré-évaporateur (49) dans un premier temps à sa température d'ébullition et est évaporé en partie et dans laquelle le fluide de travail est ensuite évaporé totalement dans l'évaporateur principal (50).

12. Installation de production combinée de chaleur et d'électricité (1) selon l'une quelconque des revendications 1 à 11, **caractérisée en ce que** l'échangeur de chaleur de condensation (20) est réalisé en tant qu'un condensateur de mélange, dans laquelle le fluide de travail évaporé est mélangé, après avoir traversé la turbine à vapeur (2), à du fluide de travail fluide, qui a traversé le circuit primaire (26) et/ou le circuit de lubrification (37), au moyen du condensateur de mélange de sorte que le fluide de travail évaporé est condensé.

13. Installation de production combinée de chaleur et d'électricité (1) selon l'une quelconque des revendications 1 à 12, **caractérisée en ce que** le condensateur (5) est réalisé en tant qu'une unité sous vide, dans laquelle le boîtier de condensateur (10) est configuré de manière étanche aux gaz et dans laquelle un volume de gaz renfermé par le boîtier de condensateur (10) présente une pression de gaz inférieure à celle d'un volume de gaz entourant le boîtier de condensateur (10).

14. Procédé servant à commander une installation de production combinée de chaleur et d'électricité (1) selon la revendication 13, **caractérisé en ce que** lors d'une étape de mesure (68), un besoin thermique et/ou électrique est défini à l'aide des paramètres de fonctionnement de l'objet d'alimentation, dans lequel lors d'une étape de définition (69) suivant l'étape de mesure (68), une fourniture réel thermique et/ou électrique de l'installation de production combinée de chaleur et d'électricité (1) est défini, dans lequel dans une étape d'évaluation (70) suivant l'étape de définition (69), une différence entre le besoin et la fourniture réel est déterminée et dans lequel lors d'une étape de régulation (71) suivant l'étape d'évaluation (70), la fourniture de spécification thermique et/ou électrique est défini sur la base de la différence déterminée et dans lequel lors d'une étape de réglage (72) suivant l'étape de régulation (71), l'apport en combustible et/ou une position de soupape de dérivation sont réglés de telle sorte à l'aide de règles de commande que la fourniture de spécification est atteint.
